Europäisches Patentamt

European Patent Office

Office européen des brevets

(11) Veröffentlichungsnummer: **0 405 439 B1**

# EUROPÄISCHE PATENTSCHRIFT

(45) Veröffentlichungstag der Patentschrift: **18.10.95**

(51) Int. Cl.6: **C08J 9/12**, C08J 9/14,
//(C08J9/12,C08L75:04)

(21) Anmeldenummer: **90112116.0**

(22) Anmeldetag: **26.06.90**

(54) **Hartschaumstoff sowie Verfahren zur Herstellung desselben.**

(30) Priorität: **28.06.89 DE 3921223**
**14.09.89 DE 3930824**
**31.10.89 DE 3936245**
**16.03.90 DE 4008545**

(43) Veröffentlichungstag der Anmeldung:
**02.01.91 Patentblatt 91/01**

(45) Bekanntmachung des Hinweises auf die
Patenterteilung:
**18.10.95 Patentblatt 95/42**

(84) Benannte Vertragsstaaten:
**AT BE CH DE DK ES FR GB GR IT LI LU NL SE**

(56) Entgegenhaltungen:
**GB-A- 659 251**
**GB-A- 2 143 237**

(73) Patentinhaber: **Bosch-Siemens Hausgeräte
GmbH
Hochstrasse 17
D-81669 München (DE)**

(72) Erfinder: **Wenning, Udo, Dr.
Köflacher Strasse 17
D-7928 Giengen (DE)**
Erfinder: **Brodsky, Jan
Herbrandtstrasse 16
D-7928 Giengen (DE)**

**Beschreibung**

Die Erfindung betrifft einen weitgehend geschlossenzelligen Hartschaumstoff auf Polyurethan- bzw. Polyisocyanurat-Basis, dessen zellige Struktur durch Aufschäumen von Hartschaumrohstoffen auf Basis von Polyolen und Isocyanaten mit Kohlendioxid als Blähmittel, ggf. unter zusätzlicher Verwendung von Aktivatoren und/oder Stabilisatoren gebildet ist.

Unter Hartschaumstoffen versteht man bekanntlich Kunststoffe mit einer durch ein Schäumungsverfahren erzeugten zelligen Struktur, mit vergleichsweise niedrigem Raumgewicht sowie mit geringer Wärmeleitfähigkeit. Gegebenenfalls kann das Schäumungsverfahren gleich mit der Kunststoffherstellung gekoppelt werden. Man verwendet die Hartschaumstoffe vielfach als Dämmstoffe zum Schallschutz und/oder als Wärmeisolation im Bauwesen, in der Kühl- und Wärmetechnik, z.B. für Haushaltsgeräte, zur Herstellung von Verbundwerkstoffen, etwa als Sandwichelemente, oder auch als Schaumkunstleder, ferner als Dekorations-, Modell-, Verpackungs- und Polstermaterial.

Hartschaumstoffe auf Polyurethan- bzw. Polyisocyanuratbasis sind bekannt und werden beispielweise durch exotherme Reaktion eines Polyols mit einem Isocyanat hergestellt, wobei die Reaktionsgeschwindigkeit durch einen geeigneten Aktivator einstellbar ist. Zum Aufschäumen dient ein Blähmittel geeigneter Siedepunktlage, das im Polyol löslich ist und bei Erreichen des Siedepunktes aufschäumt und dadurch die Porenstruktur erzeugt. Zur Verbesserung der Fließfähigkeit ist und/oder wird dem Polyol im allgemeinen Wasser zugesetzt, das mit dem Isocyanat unter Bildung von $CO_2$ reagiert, das als zusätzliches Blähmittel wirkt.

Dieser Prozeß ist stochastisch. Je nach Nukleierung, die sich z.B. durch Luftbeladung des Reaktionsgemisches erzielen läßt, ergeben sich unterschiedlich große Zellen.

Das Ziel einer jeden Entwicklung von insbesondere zu Isolierzwecken einzusetzenden Hartschaumstoffen ist, möglichst viele kleine und geschlossene Zellen zu erzielen.

Die Wärmeleitung eines Hartschaumstoffes setzt sich aus vier Komponenten zusammen, nämlich:
- Konvektion in den Poren
- Wärmeleitung des Blähmittels
- Wärmeleitung des Polymers
- Wärmestrahlung.

Bei den heute üblichen kleinen Porendurchmessern von 0,2 bis 0,5 mm spielt die Konvektion keine Rolle mehr. Die Auswahl des Blähmittels sollte u.a. unter dem Aspekt niedriger Wärmeleitung des Gases erfolgen.

Die Wärmeleitung des Polymers läßt sich durch die Reduzierung des Anteils der Gerüststruktur (zugunsten der Zellmembran) verringern. Der Strahlungs-Anteil läßt sich günstig durch kleinere Zellendurchmesser beeinflussen.

Die am besten isolierenden Hartschaumstoffe sind z.Z. sehr feinzellige Typen mit einem hohen Anteil eines Blähgases niedriger Wärmeleitzahl in den Zellen.

Es ist allgemein bekannt, zur Herstellung von Hartschaumstoffen als physikalische Blähmittel Fluorchlorkohlenwasserstoffe (FCKW's) zu verwenden. Eine besondere und verbreitete Bedeutung haben sie bei der Herstellung von Hartschaumstoffen auf Polyurethan- und Polyisocyanuratbasis, die ausgehend von Polyolen und Isocyanaten hergestellt werden, erlangt. Herstellungstechnisch zeichnet sich die Verwendung von FCKW's besonders dadurch aus, daß sie in den verwendeten Polyolen sehr gut löslich sind. Ihr über den üblichen Temperaturen im Arbeitsbereichumfeld liegender Siedebereich steht in einer vorteilhaften Relation zu den bei der Herstellung auftretenden Reaktionstemperaturen. Funktionstechnisch zeichnet sich die Verwendung der FCKW's dadurch aus, daß diese Polyurethane bzw. Polyisocyanurate nicht angreifen Die vergleichsweise schlechte Wärmeleiteigenschaft der FCKW's begünstigt ferner einen niedrigen Wärmedurchgangswert durch den fertigen Hartschaumstoff.

Die mannigfache und weit verbreitete Anwendung von Hartschaumstoffen führt zwangsläufig dazu, daß entsprechend große Mengen an FCKW's zum Einsatz kommen, wobei sich spätestens bei der Entsorgung der Hartschaumstoffe die Chloranteile der FCKW's als im äußersten Maße umweltschädlich erweisen. Die Folgen sind hinlänglich bekannt.

Es hat daher nicht an Versuchen gefehlt, Hartschaumstoffe ohne FCKW's oder zumindest mit verringertem FCKW-Anteil als Blähmittel herzustellen und zum Einsatz zu bringen.

Die Arbeit von M. Mann und B. Phillips "FCKW-Blähmittel in Hartschaumstoffen", veröffentlicht in der Zeitschrift "Kunststoffe", 79 (1989), Seiten 328-333 zeigt den derzeitigen Stand der Technik und die Problematiken bei der Verwendung von Ersatzstoffen, z.B. teilhalogenierten Kohlenwasserstoffen (H-FCKW), als Blähmittel anstelle von FCKW auf.

Es ist auch ein Verfahren zur Herstellung von zellhaltigen Kunststoffen nach dem Polyisocyanat-Polyadditionsverfahren bekannt geworden, bei welchem in den Hartschaumrohstoffen schwer lösliche oder unlösliche Verbindungen als Blähmittel verwendet werden, wobei diese unter Verwendung von oligomeren Acrylaten in einen der Hartschaumrohstoffe einemulgiert werden.

In diesem Fall werden Blähmittel zum Einsatz gebracht, die gegenüber den üblicherweise verwendeten FCKW-Blähmittel den Vorteil haben, daß sie keine Chloranteile aufweisen. Damit werden also Blähmitel verwendet, die ozonunschädlich sind und damit keinen Beitrag mehr zur Ozonlochbildung in der Atmosphäre bilden Diese Blähmittel bauen sich aber natürlich nur sehr schwer und langsam ab, so daß sie zwar hervorragend recyclingfähig sind, andererseits in der Atmosphäre zum Treibhauseffekt relativ langzeitig beitragen.

Es ist auch bekannt, Hartschaumstoffe unter Verwendung von $CO_2$ -Blähmittel zu schäumen, welches durch dem Polyol beigegebenen Wasseranteil und dem Isocyanat bei der Reaktion des Isocyanats mit dem Polyol während des Schäumprozesses gebildet wird. $CO_2$ -Gase lassen sich in der Natur leicht abbauen. Insoweit sind sie relativ umweltfreundlich.

Die nach den bisherigen Erkenntnissen mit $CO_2$ -Blähmittel geschäumten Schaumstoffe zeichnen sich gegenüber den herkömmlich mit FCKW-Blähmitteln geschäumten Hartschaumstoffen dadurch nachteilig aus, daß höhere Wärmeleitwerte erzielt werden Um die gleiche Isolationswirkung zu erzielen, wäre es erforderlich, die Stärke des Hartschaumstoffs um ca. 30 % und mehr zu vergrößern. Bei wärmeisolierten Geräten, z.B. bei Haushaltsgeräten, wie Kühlschränken und Gefriergeräten, führt dies dazu, daß entweder der nutzbare Rauminhalt verringert bzw. die Geräte-Außenmaße vergrößert werden müssen Jedenfalls ist der Wirkungsgrad der in bekannter Weise mit $CO_2$ -Blähmitteln geschäumten Hartschaumstoffe wesentlich schlechter als der von in bekannter Weise mit FCKW-Blähmitteln geschäumten Hartschaumstoffen. Als wesentlicher Grund für die schlechten Isoliereigenschaften von mit $CO_2$ -Blähmittel geschäumten Hartschaumstoffen läßt sich die Zellenstruktur und Zellengröße innerhalb der fertigen Hartschaumstoffe feststellen Nach dem bekannten Verfahren war es nicht möglich, bei mit $CO_2$ -Blähmittel geschäumten Hartschaumstoffen diese Zellenstruktur und Zellengröße entscheidend zu optimieren

Die Aufgabe der vorliegenden Erfindung ist es, einen Hartschaumstoff, insbesondere auf Polyurethan- und Polyisocyanuratbasis bereitzustellen, bei dessen Herstellung anstelle von FCKW-Blähmitteln im wesentlichen $CO_2$ -Blähmittel verwendet werden, welche in bekannter Weise während des Reaktionsprozesses der Hartschaum-Rohkomponenten aus diesen gebildet wird.

Dabei sollen Wege gefunden werden, insbesondere die Zellenstruktur innerhalb des Hartschaumstoffs zu homogenisieren und die Zellengröße zu verkleinern.

Es wurde nunmehr erfindungsgemäß ein Hartschaumstoff gefunden, welcher dieser Forderung gerecht wird und welcher dadurch gekennzeichnet, ist, daß der Hartschaumstoff im wesentlichen eine homogene Zellenstruktur mit einer Zellengröße von kleiner als 100 $\mu$m Durchmesser und im wesentlichen $CO_2$-Blähmittel sowie mit Anteilen eines physikalischen in zumindest einem der verwendeten Hartschaumrohstoffe unlöslichen oder schwer löslichen, d.h. praktisch unlöslichen Blähmittel ausgewählt aus der Gruppe der perfluorierten oder im wesentlichen perfluorierten Kohlenwasserstoffe und der perfluorierten oder im wesentlichen perfluorierten Äther und Mischungen hieraus, gegebenenfalls in Mischung mit bis zu 50 Vol.-% an polaren Blähmitteln oder aliphatischen oder zyklischen Kohlenwasserstoffen in einem Gewichtsanteil von maximal 1:1 bezogen auf die vorgenannten Blähmittel als Zelleninhalt aufweist. Bevorzugterweise ist einerseits die Zellengröße zwischen 50 $\mu$m und 80 $\mu$m und andererseits der Gewichtsanteil des in zumindest einem der verwendeten Hartschaumstoffe unlöslichen oder schwer löslichen, d.h. praktisch unlöslichen Blähmittels kleiner als 3,5 %, besonders bevorzugt kleiner als 2 %, beispielsweise ca. 1 % des Hartschaumstoffes.

In diesem Rahmen sind Blähmittel zweckmäßiger Weise zu wählen, deren normaler Siedepunkt oder Siedebereich bevorzugt innerhalb eines Temperaturbereichs von 20° bis 80°C liegt.

Bevorzugterweise kann ein das im Hartschaumrohstoff unlösliche oder schwer lösliche, d.h. praktisch unlösliche Blähmittel nukleierender Emulgator zum Einsatz gebracht sein. Als anorganische Emulgatoren bieten sich beispielsweise Kieselgel an, während Stärke (Amylum solubile) ein geeigneter organischer Emulgator ist. Dabei liegt der Emulgatoranteil bei ca. 2 % bis 5 % der Gewichtsanteile des zum Einsatz gebrachten, in einem der Hartschaumrohstoffe unlöslichen oder schwer löslichen, d.h. praktisch unlöslichen Blähmittels.

Es wurde somit gefunden, daß man zur Herstellung von Hartschaumstoffen mit vorteilhaften Eigenschaften nicht nur, wie bisher angenommen, in den Hartschaumrohstoffen lösliche Blähmittel verwenden kann, sondern daß man zu Hartschaumstoffen eines ausgezeichneten Gebrauchswertes auch dann gelangt, wenn man sie unter Verwendung von unpolaren oder praktisch unpolaren und damit unlöslichen bzw. praktisch unlöslichen Blähmitteln herstellt, welches intensiv mechanisch unter zweckmäßiger Zugabe eines physikalisch wirksamen Emulgators in einen der Hartschaumstoffe zu einer homogenen Emulsion eingemischt ist.

Zielführend wurde ferner gefunden, daß der Einsatz von unpolaren und praktisch unpolaren physikalischen Blähmitteln unter den erfindungsgemäßen Bedingungen nicht nur große entsorgungstechnische Vorteile bietet, sondern daß sich durch den Einsatz der beschriebenen Blähmittel unter Einsatz eines Emulgators auch Hartschaumstoffe mit besonders vorteilhaften Eigenschaften, insbesondere definierter und dabei extrem geringer Zellengröße und dadurch extrem geringer Wärmeleitfähigkeit herstellen lassen Die Alterungsbeständigkeit ist sowohl bei Verwendung. von Lösungsvermittlern als auch bei Verwendung von Emulgatoren hervorragend.

Gegenstand der Erfindung sind somit Hartschaumstoffe sowie Verfahren zu ihrer Herstellung, wie sie in den Ansprüchen gekennzeichnet sind.

Bei den erfindungsgemäßen Hartschaumstoffen handelt es sich um solche, die ausgehend von üblichen bekannten Hartschaumrohstoffen unter Anwendung üblicher Schäumungstechniken unter Einsatz eines physikalischen Blähmittels und bedarfsweisen Hinzufügung eines chemischen Blähmittels hergestellt werden können, z.B. auf der Basis von Polyurethanen und Polyisocyanuraten.

Aus dem Bereich der zur Verfügung stehenden unpolaren Blähmittel ist das für den Einzelfall geeignete Blähmittel im wesentlichen nach den Gesichtspunkten seiner Verträglichkeit mit dem Emulgator und seinem Siedepunkt auszuwählen Es soll im Hartschaumrohstoff unlöslich oder praktisch unlöslich sein, d.h. seine Löslichkeit im Hartschaumrohstoff soll gleich Null oder nur so gering sein, daß es nur mittels eines Emulgators oder Lösungsvermittlers in einer für die Durchführung einer praxisgerechten Schäumung erforderlichen Menge in den Hartschaumrohstoff eingeführt werden kann.

Einerseits hat sich die Verwendung von unpolaren, von Chlor vollständig freien fluorierten Kohlenwasserstoffen als geeignet erwiesen, insbesondere von vollfluorierten Kohlenwasserstoffen, wofür Perfluorpentan der Formel $C_5F_{12}$ ein vorteilhaftes Beispiel ist. Die Verwendung von Perfluorpentan hat sich insbesondere deshalb als besonders vorteilhaft erwiesen, weil es einen Siedepunkt von 28°C hat, der in einen für die Praxis besonders vorteilhaften Siedebereich von 20 - 60°C fällt.

Ein anderes, erfindungsgemäß verwendbares physikalisches Blähmittel ist z.B. Perfluorhexan ($C_6F_{14}$), dessen Siedepunkt von 57°C ein verzögertes Aufschäumen bewirkt.

Andererseits sind auch als physikalische Blähmittel perfluorierte oder im wesentlichen perfluorierte Äther mit geeignetem Siedpunkt oder Siedebereich verwendbar. Gegebenenfalls können auch Mischungen von unpolaren Blähmitteln des beschriebenen Typs untereinander und/oder mit polaren Blähmitteln, z.B. teilhalogenierten Kohlenwasserstoffen, beispielsweise $CHCl_2 CF_3$ (R 123) und $CH_3 CCl_2 F$ (R 141b) eingesetzt werden. Beispielsweise können bis zu 50 Vol.-% der unpolaren Blähmittel durch polare Blähmittel ersetzt werden, ohne daß die günstigen funktionellen Eigenschaften des Hartschaumstoffes wesentlich beeinträchtigt werden.

Die zur Herstellung eines erfindungsgemäßen Hartschaumstoffes geeigneten physikalisch wirkenden Emulgatoren können anorganischer wie auch organischer Natur sein. Anorganische Emulgatoren, die sich als besonders vorteilhaft zur Herstellung eines erfindungsgemäßen Hartschaumstoffes erwiesen haben, sind z.B. solche auf $SiO_2$-Basis, d.h. Kieselgele, insbesondere solche mit Korngrößen von 2 $\mu$m bis 25 $\mu$m und einem Porendurchmesser von 60 bis 100 A. Derartige Emulgatoren sind im Handel erhältlich, z.B. von der Firma Merck unter der Bezeichnung Kieselgel 60 bzw. LiChrosorb Si60.

Bei der Herstellung des erfindungsgemäßen Hartschaumstoffes auf Polyurethan bzw. Polyisocyanurat-Basis wird erfindungsgemäß so verfahren, daß zur Bildung eines feinporigen Hartschaumstoffs in zumindest eine der Hartschaumrohstoffe ein in diesem Hartschaumrohstoff unlösliches oder schwer lösliches und damit praktisch unlösliches Blähmittel in Form der dispersen Phase einer Emulsion mit flüssiger Tröpfchengröße von weniger als 10 $\mu$m und einem Anteil von weniger als 3,5 %, bevorzugt weniger als 2 % des Hartschaumstoffes vor Beginn der chemischen Reaktion homogen einemulgiert wird, und daß die Hartschaumrohstoffe Komponenten zur Erzeugung des wesentlichen Bedarfs an insgesamt erforderlichem Blähmittel in Form von Kohlendioxid enthalten Bevorzugt sind flüssige Tröpfchengrößen von ca. 4 $\mu$m Durchmesser des in dem verwendeten Hartschaumrohstoff unlöslichen oder schwer löslichen, d.h. praktisch unlöslichen Blähmittels, dessen Gewichtsanteil von ca. 1 % des Hartschaumstoffs ist.

Dieses Kohlendioxid wird während des Schäumprozesses in bekannter Weise beispielsweise durch Wasser, das in der erforderlichen Weise der Polyol-Rohstoffkomponente zugegeben ist, und dem Isocyanat gebildet.

Dabei wirken sich die als disperse Phase einer Emulsion ursprünglich in dem Polyol vorliegenden kleinen Tröpfchen des in relativ kleinen Mengen eingebrachten, mit dem Polyol unlöslichen oder schwer löslichen, d.h. praktisch unlöslichen Blähmittel während des Schäumvorgangs und der $CO_2$-Gas-Bildung auf das entstehende $CO_2$-Gas nukleierend aus, d.h. die in das Polyol einemulgierten Blähmittel-Zellen bilden Bläschen in die das $CO_2$-Gas eindiffundiert.

Werden in 100 Gewichtsteile Polyol zwei Gewichtsteile von unlöslichem Blähmittel zu Tröpfchengröße von ca. 4 $\mu$m Durchmesser einemulgiert, so sind in 1 cm³ Polyol ca. 9.10⁹ Blähmitteltröpfchen enthalten, von denen sich jedes im wesentlichen gleich auf die bei der späteren CO₂ -Gas-Bildung enthaltenden Zellengrößen und Zelleninhalte auswirkt. Damit weist der im wesentlichen CO₂ -Gas getriebene Schaum eine homogene und feinporige Zellenstruktur auf.

Das in einem der verwendeten Hartschaumrohstoffe, z.B. im Polyol, unlösliche oder schwer lösliche, d.h. praktisch unlösliche Blähmittel wird beispielsweie unter Anwendung hoher Scherkräfte und/oder unter Verwendung von auf dieses Blähmittel nukleierend wirkende Emulgatoren in dieses Blähmittel als disperse Phase einer Emulsion intensiv und homogen eingearbeitet und anschließend in diesen Hartschaumrohstoff, dem Polyol, intensiv eingearbeitet, wonach unter Zufügung des weiteren Hartschaumrohstoffes, dem Isocyanat, der Schäumprozeß eingeleitet und durchgeführt wird.

Beispielsweise kann das Gewichtsanteil-Verhältnis von Polyol zu Wasser zu Isocyanat zu unlöslichem Blähmittel bei ca. 100 : 160 : 3 : 2 oder 100 : 175 : 4 : 2 oder ähnlichem liegen Eine Erhöhung des Anteils an unlöslichem Blähmittel würde die Wärmeisolationseigenschaften verbessern

Durch Verwendung von aliphatischen und/oder cyclischen Kohlenwasserstoffen, beispielsweise n-Pentan und/oder n-Hexan, oder ähnlichen chlorfreien Stoffen als zusätzlicher, in den Hartschaumrohstoffkomponenten lösliche Blähmittel wird die Wärmeisolationseigenschaft, insbesondere im Alterungsverhalten verbessert, da derartige Blähmittel - wie die unlöslichen oder praktisch unlöslichen Blähmittel - nicht oder kaum durch die Zellwaschungen des fertigen Hartschaums diffundieren und selbst hohe Wärmedämmeigenschaften haben Um den geforderten feinzelligen Schaum zu erhalten, sollte der Gewichtsanteil der löslichen Blähmittel den Gewichtsanteil der unlöslichen oder praktisch unlöslichen Blähmittel im Hartschaum nicht übersteigen.

Das lösliche Blähmittel wird bevorzugt zuerst in die Polyol-Rohstoffkomponente eingemischt und darin gelöst, wonach das unlösliche oder praktisch unlösliche Blähmittel in diese Lösung in homogener Form einer Emulsion intensiv eingearbeitet wird.

Erfindungsgemäß läßt sich somit eine definierte Zellengröße z.B. dadurch erzielen, daß man einen Hartschaumrohstoff, z. B. das Polyol, und das Blähmittel mit Emulgator zu einer Emulsion vermischt, wobei die kohärente Phase aus dem Polyol und die disperse Phase aus dem Blähmittel mit Emulgator besteht. Durch Auswahl eines geeigneten Emulgators (z.B. Kieselgel definierter Korngröße und Porigkeit) läßt sich die Größe der Blähmitteltröpfchen vorgeben. Beim Vermischen dieser Emulsion mit der Isocyanatkomponente vermischt sich diese mit der kohärenten Phase, ohne die disperse Phase zu beeinflussen Durch die Reaktionswärme wird der Siedepunkt des Blähmittels überschritten, so daß Zellen entstehen, deren gasförmiger Blähmittelgehalt exakt dem flüssigen Inhalt der Tröpfchen der Emulsion entspricht.

Bei der Emulgierung lassen sich Treibmitteltröpfchen mit weniger als 20 $\mu$m Durchmesser erzielen Bei der Vermischung des Polyols mit dem Isocyanat beispielsweise bleiben die Tröpfchen unverändert. Bei Erreichen des Siedepunktes geht jedes einzelne Blähmitteltröpfchen in den gasförmigen Zustand über und bildet eine Zelle. Aus dem Unterschied der Dichte des Blähmittels im flüssigen und gasförmigen Zustand ergibt sich bei den in Frage kommenden Blähmitteln eine Vergrößerung des Volumens auf das 100- bis 200-fache. Damit ist es z.B. möglich, Polyurethan-Hartschaumstoffe mit definierter Zellengröße von kleiner als 0,1 mm zu erzeugen.

Dadurch, daß der erfindungsgemäße Hartschaumstoff bei Verwendung von Emulgatoren aus einer Emulsion und nicht aus einer Lösung des Blähmittels im Hartschaumrohstoff, z.B. im Polyol entsteht, wird eine sehr feine gleichmäßige Zellstruktur erreicht. Wegen der niedrigen Wärmeleitzahl des Blähmittels lassen sich z.B. Polyurethan-Hartschaumstoffe herstellen, deren niedrige Wärmeleitfähigkeit fast die theoretisch möglichen Werte erreichen.

Für die Wärmeleitfähigkeit eines Hartschaumstoffes ist in erster Linie die Zusammensetzung des Zellgases maßgeblich. Die typische Zellgas-Zusammensetzung eines Trichlorfluormethan (R 11)-getriebenen Schaumes besteht aus 0 bis 10 Vol.% Luft, 20 bis 30 Vol.% CO₂ und 60 bis 70 Vol.% CCl₃ F. Bei hochisolierenden Hartschaumstoffen ist der Blähmittel-Anteil weiter erhöht.

Es hat sich ferner gezeigt, daß alle bisher bekannten FCKW's und H-FCKW's mit den Kunststoffen, die für Deckschichten verwendet werden, reagieren. Dies sind beispielsweise im Kühlschrankbau im wesentlichen schlagzähe Polystyrole (SB) bzw. Acrylnitril-Butadien-Styrol (ABS).

Im Falle von Trichlorfluormethan (R 11) beispielsweise hat man beständige Polystyrole bzw. ABS-Typen entwickeln müssen H -FCKW's, wie z.B. CHCl₂ CF₃ (R 123) und CH₃ CCl₂ F (R 141b) lösen bzw. quellen SB und ABS an, so daß hier neuartige Kunststoffe bzw. beständige Varianten entwickelt werden müssen.

Beim Einsatz eines inerten, unpolaren Fluorkohlenwasserstoffs können demgegenüber die vorhandenen Materialien eingesetzt werden, da keine Schädigung eintritt.

Schließlich ist bekannt, daß die bekannten Hartschaumstoffe im Laufe der Zeit altern. Die Wärmeleitfähigkeit nimmt zu, weil Luft und ggf. Feuchtigkeit in den Hartschaumstoff und dessen Zellen - relativ schnell - eindiffundieren und das Blähmittelgas - sehr langsam - ausdiffundiert. Es ist daher bekannt, die Alterung durch spezielle diffusionsdichte Deckschichten, z.B. durch metallische Folien zu verhindern.

Die üblichen Kunststoffe SB und ABS stellen auch für die erfindungsgemäß eingesetzten Blähmittel sehr gut wirksame Diffusionsbarrieren dar und lassen sich von diesen nicht anlösen, so daß die Blähmittel sehr wirksam am Austritt aus dem Hartschaumstoff auch langfristig gehindert werden. Auch die Polyurethan-Zellmembranen selbst sind weitgehend diffusionsdicht und ebenfalls durch das erfindungsgemäße Blähmittel nicht anlösbar, so daß das Alterungsverhalten sehr günstig ist.

Im Falle konventioneller Polyurethan-Hartschaumstoffe beispielsweise werden die Hartschaumrohstoffe flüssig in die Schäumformen eingetragen. Erst nach einer bestimmten Zeit (cream time) wird der Schaum cremeartig. Während dieser Zeit muß ein Gehäuse sehr gut abgedichtet sein, um die flüssigen Komponenten am Austritt zu hindern.

Ein erfindungsgemäß unter Verwendung eines physikalisch wirkenden Emulgators hergestellter Schaum ist sogleich nach dem Austritt aus dem Mischkopf cremeartig.

Typische geeignete Aktivatoren und Stabilisatoren, die zur Herstellung der erfindungsgemäßen Hartschaumstoffe eingesetzt werden können, sind z.B. tertiäre Amine bzw. Silikone, die normalerweise in die Polyole eingearbeitet sind.

Anorganische Emulgatoren, die sich als besonders vorteilhaft zur Herstellung eines erfindungsgemäßen Hartschaumstoffs erwiesen haben, sind z.B. solche auf $SiO_2$-Basis, d.h. Kieselgele, insbesondere solche mit Korngrößen von 2 $\mu$m bis 25 $\mu$m und einem Porendurchmeser von 60 bis 100 Å . Derartige Emulgatoren sind im Handel erhältlich, z.B. von der Firma Merk, unter der Bezeichnung Kieselgel 60 bzw LiChrosorb SI 60. Der Einsatz von Stärke (Amylum solubile) als Emulgator hat sich insbesondere dann besonders vorteilhaft erwiesen, wenn Emulsionen mit hochfeinen Tröpfchen hergestellt werden sollen.

Die nach den erfindungsgemäßen Merkmalen hergestellten Hartschaumstoffe weisen ähnliche Wärmedämmeigenschaften auf, wie FCKW-getriebene Hartschaumstoffe mit reduziertem RL-Gehalt und können, ausgehend von Polyol- und Isocyanat- sowie Zusatzstoffkomponenten, wie sie zur Herstellung von FCKW-geschäumten Hartschaumstoffen zum Einsatz gebracht werden können, mit den gleichen Misch- und Schäumeinrichtungen hergestellt und verarbeitet werden.

Die folgenden Beispiele sollen die Erfindung näher veranschaulichen.

Dazu wurden erstellt:

Hartschaumstoffe gemäß der Erfindung nach folgenden Rezepturansätzen (GT = Gewichtsteile der Komponenten)

Ansatz A

5000 g = 100 GT Polyol, OH-Zahl: 370 ± 10: Wassergehalt: 3,15 Gew%
8050 g = 161 GT Isocyanat MDI
900 g = 18 GT Perfluorpentan ($C_5F_{12}$), Siedepunkt 28°C
27 g = 0,54 GT Kieselgel, Korngröße 5 $\mu$m, Porendurchmesser 60 Å

Ansatz B

8000 g = 100 GT Polyol, OH-Zahl: 370 ± 10, Wassergehalt 3,15 Gew%
12880 g = 161 GT Isocyanat MDI
1920 g = 24 GT Perfluorpentan ($C_5F_{12}$), Siedepunkt 28°C
57,6g = 0,72 GT Kieselgel, Korngröße 5-10 $\mu$m, Porendurchmesser 60 Å

Ansatz C

5000 g = 100 GT Polyol, OH-Zahl: 450 ± 15; wasserfrei
120 g = 2,4 GT Wasser
7700g = 154 GT Isocyanat MDI
1800 g = 36 GT Perfluorpentan ($C_5F_{12}$), Siedepunkt 28°C
54 g = 1,08 GT Kieselgel, Korngröße 2-25 $\mu$m, Porendurchmesser 60 Å

Ansatz D

5000 g = 100 GT Polyol, OH-Zahl: 370 ± 10, Wassergehalt 3,15 Gew%
8050 g = 161 GT Isocyanat MDI
1300 g = 26 GT Perfluorpentan ($C_5F_{12}$), Siedepunkt 28°C
39 g = 0,78 GT Kieselgel, Korngröße 2-25 $\mu$m, Porendurchmesser 60 Å

Ansatz E

100 GT Polyol, OH-Zahl: 370 ± 10, Wassergehalt 3,15 Gew%
161 GT Isocyanat MDI
25 GT Perfluorpentan ($C_5F_{12}$), Siedepunkt 28°C
0,75 GT Kieselgel, Korngröße 2-25 $\mu$m, Porendurchmesser 60 Å

Ansatz F

100 GT Polyol, OH-Zahl: 370 ± 10, Wassergehalt 3,15 Gew%
161 GT Isocyanat MDI
25 GT Perfluorpentan ($C_5F_{12}$), Siedepunkt 28°C
1 GT Stärke (Amylum solubile),

Ansatz G

100 GT Polyol, OH-Zahl: 370 ± 10, Wassergehalt 3,15 Gew%
161 GT Isocyanat MDI
15 GT Perfluorpentan ($C_5F_{12}$), Siedepunkt 28°C
0,45 GT Kieselgel, Korngröße 5 $\mu$m, Porendurchmesser 60 Å

Ansatz H

100 GT Polyol, OH-Zahl: 370 ± 10, Wassergehalt 3,15 Gew%
161 GT Isocyanat MDI
12,5 GT Perfluorpentan ($C_5F_{12}$), Siedepunkt 28°C
12,5 GT FCKW R123 ($CHCl_2 CF_3$), Siedepunkt 28,7°C
0,75 GT Kieselgel, Korngröße 2-25 $\mu$m, Porendurchmesser 60 Å
und Hartschaumstoffe nach dem Stand der Technik zu Vergleichszwecken nach folgenden Rezepturansätzen

Ansatz R

100 GT Polyol, OH-Zahl: 370 ± 10, Wassergehalt 3,15 Gew%
161 GT Isocyanat MDI
18 GT Trichlorfluormethan (R11)

Ansatz S

100 GT Polyol, OH-Zahl: 450 ± 15; Wassergehalt 1,8 Gew%
154 GT Isocyanat MDI
36 GT Trichlorfluormethan (R11)

Ansatz T

100 GT Polyol, OH-Zahl: 300 ± 10, Wassergehalt 3,8 Gew%
161 GT Isocyanat MDI
blähmittelfrei
Beispielsweise sind erhältlich: Polyol mit der OH-Zahl 370 ± 10 und einem Wassergehalt von 3,15 % unter der Bezeichnung Voratec SD 110 von der Fa. Dow; Polyol mit der OH-Zahl 450 ± 15 unter der Bezeichnung Voratec SD 107 von der Fa. Dow; Isocyanat MDI unter der Bezeichnung Desmodur 44v20 der Fa. Bayer

7

AG.

Beispiel 1

Bei den drei verschiedenen Ansätzen A, B und C aus jeweils einem Polyol, einem Isocyanat, einem Blähmittel und einem Emulgator, wurde in der Weise verfahren, daß zunächst das Blähmittel mit dem Emulgator vermischt wurde, worauf die Mischung mit dem Polyol verrührt wurde. Die auf diese Weise erhaltene Emulsion wurde zusammen mit dem Isocyanat in einer Schäummaschine vom Typ HK 245, Hersteller Fa. Hennecke, verschäumt.

Aus den erhaltenen Hartschaumstoffen wurden Platten einer Größe von 18 x 18 x 3 cm$^3$ zugeschnitten und untersucht.

Es wurden die in der folgenden Tabelle 1 zusammengestellten Daten erhalten:

Tabelle 1

| Eigenschaften | Ansatz A | Ansatz B | Ansatz C |
|---|---|---|---|
| Wärmeleitzahl WLZ (mW/K • m) | 19,1 | 18,5. | 17,3 |
| Rohdichte (kg/m$^3$) | 40 | 36,8 | 36,5 |
| Druckfestigkeit (N/cm$^2$ | 18,6 | 16,8 | 13,4 |
| geschlossene Zellen in % | - | 94 | 94 |

Den erhaltenen Daten läßt sich entnehmen, daß mit steigendem Blähmittelanteil die Wärmeleitfähigkeit wie gewünscht abnimmt. Die anderen technologischen Werte entsprechen annähernd den heute eingesetzten Polyurethan-Hartschaumstoffen.

Beispiel 2

Platten einer Größe von 18 x 18 x 3 cm$^3$ aus den Ansätzen A und B wurden einem Alterungstest unterworfen, wobei sie in einem Wärmeschrank bei 60°C gelagert wurden. Zu Vergleichszwecken wurden dem gleichen Test Platten gleicher Größe unterworfen, die aus bekannten Hartschaumstoffen gemäß Ansatz R hergestellt und zugeschnitten wurden. Von den gelagerten Platten wurde in Zeitabständen (Tagen) die Wärmeleitzahl (WLZ) gemessen Die erhaltenen Ergebnisse sind in der folgenden Tabelle 2 zusammengestellt.

## T A B E L L E  2

### Wärmeleitzahlen (WLZ) in mW/K m während der Prüfdauer

**Hartschaum gem. Erfindung nach Ansatz A und Ansatz B**

| Tage | Ansatz A | Ansatz B |
|------|----------|----------|
| 0 | 19,7 | 18,5 |
| 3 | 20,9 | 19,8 |
| 5 | 21,1 | 20,1 |
| 7 | 21,5 | 20,9 |
| 10 | 22,3 | 21,4 |
| 13 | 22,8 | 21,9 |
| 17 | 23,3 | 22,1 |
| 20 | 23,5 | 22,3 |
| 24 | 23,5 | 22,4 |
| 27 | 23,7 | 22,9 |
| 52 | 24,1 | 23,1 |

**Hartschaum gem. Stand der Technik nach Ansatz R**

| Tage | Platte 1 | Platte 2 | | Platte 3 | ∅ |
|------|----------|----------|------|----------|---|
| 0 | 19,0 | 18,9 | 19,1 | 19,0 | 0 |
| 3 | 21,0 | 22,8 | 20,8 | 21,5 | |
| 6 | 22,4 | 23,0 | 23,2 | 22,9 | |
| 10 | 24,1 | 25,5 | 23,8 | 24,5 | |
| 13 | 24,7 | 24,3 | 24,1 | 24,4 | |
| 20 | 24,8 | 26,5 | 24,9 | 25,4 | |
| 28 | 25,5 | 24,9 | 25,0 | 25,1 | |
| 44 | 26,2 | 26,1 | 25,8 | 26,0 | |

Aus den erhaltenen Daten ergibt sich, daß die WLZ-Werte der erfindungsgemäßen Hartschaumstoffe niedriger sind als die WLZ-Werte des Hartschaumstoffes nach dem Stande der Technik, mit 50 % reduziertem R11-Gehalt.

Beispiel 3

Ausgehend vom Ansatz $D_\gamma$ wurden weitere Hartschaumstoffplatten einer Größe von 18 x 18 x 3 cm$^3$ hergestellt und einem Alterungstest bei 90 °C unterworfen. Zu Vergleichszwecken wurden entsprechende Platten mitgetestet, die aus mit Trichlorfluormethan (R11) erhaltenen Hartschaumstoffe nach Ansatz R zugeschnitten wurden Die erhaltenen Ergebnisse sind in der Tabelle 3 zusammengestellt.

EP 0 405 439 B1

## TABELLE 3

### Wärmeleitzahlen (WLZ) in mW/K m während der Prüfdauer

Hartschaum gem. Erfindung nach Ansatz D

| Tage | Platte 1 | Platte 2 | Platte 3 | Platte 4 | ø |
|---|---|---|---|---|---|
| 0 | | | | | 19,4 |
| 3 | 21,4 | 22,3 | 21,4 | 21,7 | 21,7 |
| 6 | 22,4 | 23,1 | 22,3 | 22,5 | 22,5 |
| 10 | 22,8 | 23,6 | 22,8 | 23,1 | 23,1 |
| 14 | 22,9 | 23,4 | 22,7 | 23,0 | 23,0 |
| 17 | 22,9 | 23,6 | 22,8 | 23,0 | 23,1 |
| 20 | 23,1 | 23,7 | 23,1 | 23,2 | 23,3 |
| 47 | 23,1 | 23,7 | 23,1 | 23,3 | 23,3 |
| 53 | 23,3 | 23,8 | 23,1 | 23,3 | 23,4 |

Hartschaum gem. Stand der Technik nach Ansatz R

| Tage | Platte 1 | Platte 2 | Platte 3 | ø |
|---|---|---|---|---|
| 0 | | | | 18,9 |
| 3 | 22,3 | 22,9 | 24,5 | 23,2 |
| 6 | 23,6 | 23,2 | 24,8 | 23,8 |
| 13 | 24,5 | 24,8 | 24,7 | 24,7 |
| 17 | 25,1 | 25,0 | 26,6 | 25,5 |
| 20 | 24,9 | 26,1 | 24,9 | 25,3 |

Aus den erhaltenen Daten ergibt sich, daß die WLZ-Werte des erfindungsgemäßen Schaumstoffes nach Erreichen des Endzustandes geringer sind als die WLZ-Werte des Hartschaumstoffes nach dem Stande der Technik.

Beispiel 4

Dieses Beispiel zeigt, daß ein erfindungsgemäßer Hartschaumstoff den weiteren Vorteil eines geringen Wasseraufnahmevermögens aufweist.

Verschiedene Hartschaumstoffwürfel einer Größe von 3 x 3 x 3 cm$^3$ wurden über mehrer Wochen in Wasser von 90°C aufbewahrt. In Zeitabständen wurde die Wasseraufnahme in Vol.-% ermittelt. Den getesteten Hartschaumstoffwürfeln lagen folgende Rezepturen nach dem Stande der Technik gemäß den Ansätzen R, S, T und nach der Erfindung gemäß Ansatz B zugrunde.

Die erhaltenen Meßwerte sind in der folgenden Tabelle 4 zusammengestellt.

10

TABELLE 4

| Wasseraufnahme von Hartschaumstoffwürfeln in Vol.-% während der Prüfdauer | | | | |
|---|---|---|---|---|
| Wochen | Ansatz R | Ansatz S | Ansatz T | Ansatz B |
| 0 | 0 | 0 | 0 | 0 |
| 1 | 6,1 | 7,2 | 7,4 | 5,9 |
| 2 | 12,6 | 12,1 | 12,2 | 9,4 |
| 3 | 14,1 | 14,5 | 13,6 | 10,8 |
| 4 | | | 18,0 | 11,1 |
| 5 | | | 15,1 | |
| 6 | 17,6 | 15,4 | 17,4 | |
| 7 | 20,5 | 18,9 | 19,3 | |
| 8 | 23,2 | 21,4 | | 13,6 |
| 9 | 21,7 | 19,9 | | |
| 10 | 24,2 | 23,6 | | |
| 11 | 28,5 | 24,3 | | |

Weiterhin zeigte sich, daß der erfindungsgemäße Hartschaumstoff wie gute Hartschaumstoffe nach dem Stand der Technik hydrolysebeständig ist, wie sich auch anhand eines Druckfestigkeitstests gemäß Tabelle 5 nachweisen läßt.

TABELLE 5

| Druckfestigkeitswerte von Hartschaumstoffwürfeln in N/cm$^2$ während der Prüfdauer | | | | |
|---|---|---|---|---|
| Wochen | Ansatz R | Ansatz S | Ansatz T | Ansatz B |
| 0 | 12,6 | 13,3 | 20,6 | 19,2 |
| 1 | 7,1 | 7,3 | 11,2 | 14,6 |
| 2 | 5,7 | 8,1 | 15,6 | 11,6 |
| 3 | 7,4 | 8,1 | 15,9 | 9,5 |
| 4 | | | 18,3 | 13,9 |
| 5 | | | 14,0 | |
| 6 | 8,6 | 7,5 | 13,6 | |
| 7 | 7,7 | 6,3 | 21,2 | |
| 8 | 10,8 | 8,0 | 12,1 | |
| 9 | 6,3 | 7,1 | | |
| 10 | 8,6 | 7,2 | | |
| 11 | 8,1 | 6,2 | | |

Beispiel 5

Dieses Beispiel zeigt, daß sich nach dem Verfahren der Erfindung insbesondere als Isolierschäume verwendbare Hartschaumstoffe mit definierter geringer Zellengröße, die unter der Zellengröße von herkömmlich mit FCKW geschäumtem Hartschaumstoff liegt, in Abhängigkeit vom verwendeten Emulgator und dessen Korngröße, herstellen lassen.

Es wurden nach der Erfindung Ansätze E, F, G und nach dem Stand der Technik ein Ansatz R verschäumt.

Hartschaumstoffe gemäß der Erfindung nach den Ansätzen E, F und G sowie gemäß dem Stand der Technik nach Ansatz R wurden bezüglich der erzielten Zellendurchmesser untersucht. Die ermittelten mittleren Zellendurchmesser der Hartschaumstoffe sind in der folgenden Tabelle 6 zusammengestellt.

TABELLE 6

| Mittlerer Zellendurchmesser von Hartschaumstoffen in mm | | | | |
|---|---|---|---|---|
| | Ansatz E | Ansatz F | Ansatz G | Ansatz R |
| Zellendurchmesser | 0,17 | 0,085 | 0,12 | 0,25 |

## Beispiel 6

Dieses Beispiel zeigt, daß sich der erfindungsgemäße Hartschaumstoff ausgezeichnet als Isolierschaumstoff in Kühlschränken verwenden läßt.

Mit dem Ansatz B wurden zwei Schränke vom Typ KIL 1600 geschäumt. Ermittelt wurden die Wärmedurchgangszahlen der Kühlschränke (k A-Werte (W/K)). Zu Vergleichszwecken wurden die entsprechenden Werte im Falle von Kühlschränken gemessen, die mit zwei anderen Hartschaumstoffen isoliert wurden

Diesen beiden anderen Hartschaumstoffen lagen Rezepturen nach Ansatz R und Ansatz S zugrunde.

Die erhaltenen Meßwerte sind in der folgenden Tabelle 7 zusammengestellt.

TABELLE 7

| Wärmedurchgangszahlen (k A-Werte (W/K)) von geschäumten Kühlschränken | | |
|---|---|---|
| Ansatz B | Ansatz R | Ansatz S |
| 1,545 / 1,530 | 1,608 | 1,569 |

Die ermittelten Werte bestätigen die für erfindungsgemäße Hartschaumstoffe vorteilhafte niedrige Wärmeleitung.

## Beispiel 7

In manchen Fällen kann es, um unpolares Triebmittel einzusparen, zweckmäßig sein, mit Mischungen aus einem erfindungsgemäß eingesetzter unpolaren Blähmittel und einem herkömmlichen polaren Blähmittel zu arbeiten Auch in diesem Falle lassen sich vorteilhafte Hartschaumstoffe herstellen.

Ausgehend vom Ansatz H wurde ein feinporiger Schaum erhalten, der sich zu Hartschaumplatten ausgezeichneter Eigenschaften verarbeiten ließ.

Entsprechend günstige Ergebnisse wurden dann erhalten, wenn mit geringeren Anteilen an $CHCl_2 CF_3$ - (R 123) gearbeitet wurde.

Je nach den sonstigen Gegebenheiten und Einsatzzielen wird bei der Hartschaumstoff-herstellung mit Wasserzusatz gearbeitet. Der Wassergehalt verbessert bei der Herstellung der Hartschaumstoffe die Fließfähigkeit des sich in den Formen bildenden und verteilenden Schaums, so daß auch komplizierte Formen gut ausgefüllt werden Andererseits verschlechtert der Wassergehalt jedoch die guten Wärmedämmeigenschaften des fertigen Hartschaumstoffes.

Im folgenden sind weitere Beispiele für Rezepturansätze mit reduziertem Gehalt an in der Polyolrohstoffkomponente unlöslichen bzw. praktisch unlöslichen Blähmitteln aufgeführt, wobei die verwendeten erfindungsgemäß relevanten Hauptkomponenten in Gewichtsanteilen (GT) angegeben sind.

## Rezepturansatz A

100 GT Polyol OH Zahl: 370 ± 10; Wassergehalt 3,15 Gew %
2 GT perfluorierter Äther
160 GT Isocyanat MDI
Dabei wurde der perfluorierte Äther unter Aufwendung hoher Scherkräfte mit dem Polyol zu einer homogenen Emulsion intensiv vermischt, so daß eine Emulsion entstand mit dem perfluorierten Äther als disperse Phase. Die Tröpfchengröße des perfluorierten Äthers war kleiner als 20 μm. Anschiießend wurde durch Zugabe des Isocyants in bei FCKW -Verfahren bekannter Weise der Schäumvorgang eingeleitet und durchgeführt.

Es entstand ein feinporiger homogener Hartschaumstoff mit einer Wärmeleitzahl von 21 mW/Km.

Rezepturansatz B

100 GT Polyol OH Zahl: 370 ± 10; Wassergehalt 3,15 Gew %
1 GT Wasser
2 GT perfluorierter Äther
0,06 GT Stärke (Amylum solubile)
176 GT Isocyanat MDI
Das Wasser wurde in Polyol gelöst; die Stärke wurde in den perfluorierten Äther eingemischt. Dann wurde der perfluorierte Äther unter Aufwendung hoher Scherkräfte mit dem Polyol zu einer homogenen Emulsion intensiv vermischt, so daß eine Emulsion entstand mit dem perfluorierten Äther als disperse Phase. Die Tröpfchengröße des perfluorierten Äthers war Kleiner als 20 μm. Anschließend wurde durch Zugabe des Isocyanats in bei FCKW-Verfahren bekannter Weise der Schäumvorgang eingeleitet und durchgeführt.

Es entstand ein feinporiger, homogener Hartschaumstoff mit einer Wärmeleitzahl von 21 mW/Km

Rezepturansatz C

100 GT Polyol OH Zahl: 370 ± 10; Wassergehalt 3,15 Gew %
1 GT Wasser
2 GT perfluoriertes Pentan
0,04 GT Stärke
176 GT Isocyanat MDI
Die Vorgehensweise war wie bei B, jedoch wurde anstelle von perfluoriertem Äther perfluoriertes Pentan verwendet, was sich günstig auf die Wärmeisoliereigenschaft auswirkte.

Es entstand ein feinporiger, homogener Hartschaumstoff mit einer Wärmeleitzahl von 20,5 mW/Km

Rezepturansatz D

100 GT Ployol OH Zahl: 370 ± 10; Wassergehalt 3,15 Geb %
1 GT Wasser
4 GT perfluoriertes Pentan
0,25 GT Stärke
176 GT Isocyanat MDI
Die Verfahrensweise war wie bei B, jedoch wurde ebenfalls wie bei C anstelle von perfluoriertem Äther perfluoriertes Pentan verwendet, aber in erhöhter Menge und mit zusätzlich erhöhtem Emulgatoranteil. Die Wärmeisoliereigenschaft war weiter verbessert.

Es entstand ein feinporiger, homogener Hartschaumstoff mit einer Wärmeleitzahl von unter 20 W/Km

Beispielsweise sind erhältlich, Polyol mit der OH-Zahl 370 ± 10 und einem Wassergehalt von 3,15 % unter der Bezeichnung XZ95-487 von der Fa. Dow; perfluorierter Äther unter der Bezeicnung Galden EX 70 der Fa. Montefluos (der Siedebereich dieses perfluorierten Äthers liegt zwischen 45 und 73°C); Isocyanat MDI unter der Bezeichnung Desmodur 44v20 der Fa. Bayer AG.

Im folgenden sind Beispiele mit zusätzlicher Verwendung von löslichen Blähmitteln aufgeführt und die Hauptkomponenten in Gewichtsanteilen (GT) angegeben.

Rezepturansatz A

100 GT Polyol OH-Zahl: 307,0; Wassergehalt: 3,4 %
6 GT Perfluorierter Ether (Polyoxyperfluoralkan)
3 GT Cyclopentant
3 GT Cyclohexan
148 GT Isocyanat MDI
Die Cyclopentan und Cyclohexan Anteile werden zuerst mit Rührwerk (200 U/min) langsam im Polyol gelöst und nach der Zugabe von perfluoriertem Ether unter Aufwendung hoher Scherkräfte (Rührwerk 2000 U/min) zu einer homogenen Emulsion intensiv vermischt. Anschließend wurde durch Zugabe des Isocyanats der Schäumvorgang eingeleitet und durchgeführt.

Es entstand ein feinzelliger homogener Hartschaum mit einer Wärmeleitzahl von 19,6 mW/Km.

Rezpturansatz B

100 GT Polyol OH-Zahl: 307; Wassergehalt: 3,4 %
9 GT Perfluorierter Ether
3 GT Cyclopentan
3 GT Cyclohexan
148 GT Isocyanat MDI
Der Vorgang ist derselbe wie im Rezepturansatz A. Es entstand ein feinporiger, homogener Hartschaum mit einer Wärmeleitzahl von 19,4 mW/Km

Rezepturansatz C

100 GT Polyol OH-Zahl: 307; Wassergehalt: 3,4 %
6 GT Perfluor-2-Methylpentan
3 GT Cyclopentan
3 GT Cyclohexan
148 GT Isocyanat MDI
Der Vorgang ist derselbe wie im Rezepturansatz A. Es entstand ein feinzelliger homogener Hartschaum.

Rezepturansatz D

100 GT Polyol OH-Zahl: 307,0; Wassergehalt 3,4 %
6 GT Perfluorhexan
3 GT Cyclopentan
3 GT Cyclohexan
148 GT Isocyanat MDI
Der Vorgang ist derselbe wie im Rezepturansatz A. Es entstand ein feinzelliger, homogener Hartschaum.

Durch zusätzliche Verwendung von physikalischen Emulsionen, wie sie bei früheren Beispielen angegeben sind, wird die Feinporigkeit des Hartschaumstoffes weiter verbessert.

Anhand von in der Zeichnung dargestellten Ausführungsbeispielen werden Vermengungsmöglichkeiten zur mechanischen Erstellung von Emulsionen aus zumindest einem Hartschaumrohstoff und einem unpolaren oder praktisch unpolaren Blähmittel zum Zwecke der Hartschaumstoff-Erstellung erläutert.

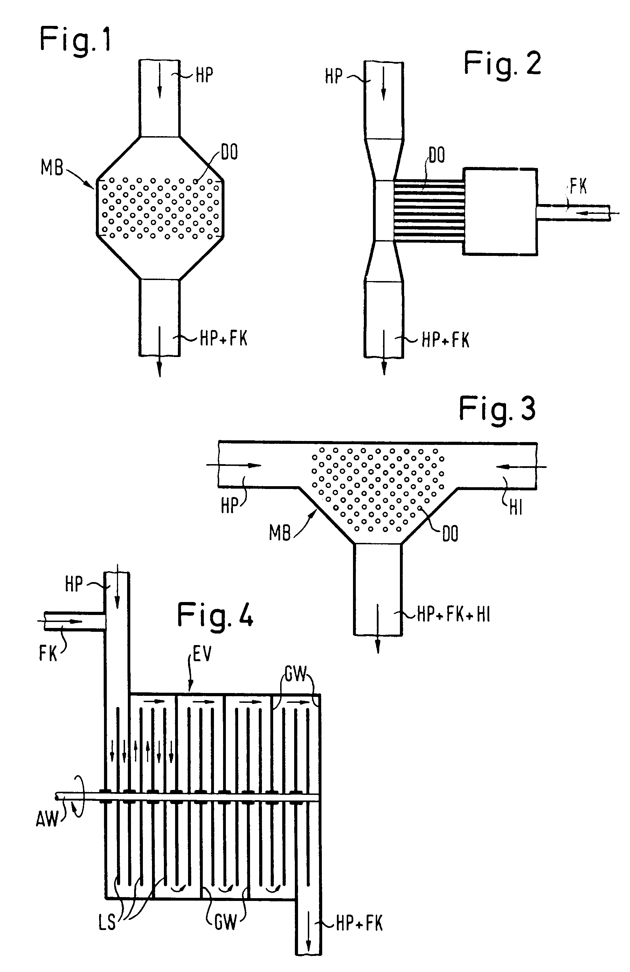

Die Figuren 1 bis 4 zeigen als Prinzipdarstellung drei verschiedene Vorrichtungen, mittels denen Emulsionen aus einem Hartschaumrohstoff bzw. aus zwei Hartschaumrohstoffen einerseits als kohärente Phase und aus einem Blähmittel andererseits als disperse Phase als Grundlage für eine Hartschaumstoff-Herstellung erzeugbar sind.

Bei einer Anordnung gemäß den Prinzipdarstellungen nach den Fig. 1 und 2 wird Polyol HP als einer der Hartschaumrohstoffe einem Mischbereich MB der Vorrichtung in Pfeilrichtung zugeführt. In diesen Mischbereich MB enden Düsenöffnungen DO, über die ein fluorierter Kohlenwasserstoff FK als Blähmittel unter Druck fein verteilt und in Form von Kleinen Tröpfchen mit einem Durchmesser unter 20 $\mu$m eingebracht wird. Die Düsenöffnungen DO wirken dabei in Form eines Brausekopfes, wobei die Tröpfchengestaltung und Tröpfchenverteilung mit Hilfe beispielsweise einer Vorrichtung realisierbar ist, die angepaßt an die vorliegenden Bedingungen gleichartig ausgebildet ist und arbeitet wie z.B. Tintenstrahl-Mosaikschreibvorrichiungen. Der Zuführdruck für den fluorierten Kohlenwasserstoff FK muß derart über dem Zuführdruck des Polyols HP liegen, daß das Polyol durch die Tröpfchen des fluorierten Kohlenwasserstoffs ausreichend durchsetzt wird. Nach dem Mischbereich MB verläßt eine Emulsion aus Polyol HP als kohärente Phase und aus fluoriertem Kohlenwasserstoff FK als disperse Phase die Vorrichtung in Richtung auf einen weiteren Mischkopf, in dem diese Emulsion HP + FK mit Isocyanat vermischt wird. Unmittelbar danach beginnt die chemische Reaktion, wobei in bekannter Weise ein Aufschäumprozeß und anschließend ein Aushärteprozeß zur Erstellung des Hartschaumstoffes stattfindet.

Bei der Anordnung gemäß Fig. 3 wird Polyol HP und Isocyanat HI einem Mischbereich MB, in welchen Düsenöffnungen DO zur Einbringung von fluorierten Kohlenwasserstoffen FK enden, eingeführt. In diesem Mischbereich MB werden das Polyol, das Isocyanat und der fluorierte Kohlenwasserstoff eine Emulsion bildend zusammengeführt. Diese Emulsion verläßt den Mischbereich MB reaktionsfähig, d.h. der Aufblähprozeß und Aushärteprozeß erfolgt im zeitlich nahen Abstand.

Bei der Anordnung gemäß der Prinzipdarstellung nach Fig. 4 wird Polyol HP und fluorierter Kohlenwasserstoff FK über Zuführkanäle in Pfeilrichtung einer Emulgiervorrichtung EV zugeleitet und durch mäanderförmig verlaufende, schmale Führungsbereiche dieser Emulgiervorrichtung EV hindurchgeführt. Diese mäanderförmig verlaufenden Führungsbereiche werden gebildet durch feststehende Gehäusewandungen GW der Emulgiervorrichtung EV, zwischen denen gemeinsam auf einer Welle AW befestigte und über diese rotierend angetriebene lamellenartige Scheiben LS angeordnet sind. Das zwischen den rotierenden lamellenartigen Scheiben LS und der Gehäusewandungen GW hindurchgeführte Gemisch aus Polyol HP und fluoriertem Kohlenwasserstoff FK wird in seinem Substanzgefüge durch die Relativbewegung, der das Gemisch zwischen den entsprechend stark rotierenden Scheiben LS und den feststehenden Gehäusewandungen GW ausgesetzt ist , sehr hohen Scherkräften unterworfen, so daß eine homogene Emulsion mit sehr kleiner Tröpfchengröße der dispersen Phase entsteht, welche dann die Emulgiervorrichtung EV in Pfeilrichtung verläßt, um wiederum einer bekannten Mischvorrichtung zugeführt zu werden, in der das Isocyanat beigemengt wird.

Die Eignung von unpolaren bzw. im wesentlichen unpolare Blähmitteln, die somit in zumindest einem der Hartschaumstoffe, z.B. dem Polyol unlöslich oder praktisch unlöslich sind, läßt sich durch gaschromatografische Messung und durch Vergleich der absoluten sowie der relativen Retentionszeiten gut vorermitteln bzw. bestätigen.

Die Retentionszeit ist die Zeit, die das jeweilige Belähmittel als Beigabe zu einem inerten Stoff beim Durchgang durch eine einen Referenzstoff enthaltende Meßstrecke benötigt, wobei die Zuführgeschwindigkeit unverändert konstant gehalten wird.

Bespielsweise ist als Meßstrecke ein Stahlrohr von 3600 mm Länge und 1,8 mm Durchmesser vorgesehen, das mit einem 4 % mit Polypropylenglykol (Ucon LB 550X) angereicherten körnigen Trägermaterial einen Chromosorb oder Supelcoport (z.B. Aluminiumsilikat) gefüllt ist. Bei konstant 40°C wird als inertes Gas Helium mit einer konstanten Durchflußmenge von 20 ml/min. in diese Meßstrecke eingeblasen. Durch eine Dosierstelle wird das zu messende Blähmittel (z.B. 5 μl) in den Heliumstrom eingegeben und zumindest mit diesem durch die Meßstrecke transportiert.

Dabei wird das Blähmittel durch das Polypropylenglykol wiederholt absorbiert und desorbiert. Die Verweilzeit in der Meßstrecke wird als Retentionszeit tms (in Sekunden) ermittelt. Daraus läßt sich ein Kapazitätsfaktor K' für das Blähmittel mit der Formel

$$K' = \frac{tms - tm}{tm}$$

berechnen, wobei tm die Retentionszeit von Luft = 86 sec ist.

Setzt man diesen errechneten Wert zum entsprechenden Wert von n-Pentan als Bezugswert eines polaren Stoffes ins Verhältnis, so erhält man ein relatives Maß der Polarität.

Folgende Werte wurden somit ermittelt, wobei Kp den Siedepunkt des jeweiligen Bläbmittels in °C wiedergibt:

| Blähmittel | Kp | tms | K' | K'(Komp.) / K'(n-Pentan) |
|---|---|---|---|---|
| C5F12 | 28 | 89 | 0,0349 | 0,0184 |
| C6F12 | 48–52 | 93 | 0.0814 | 0,0429 |
| C6F14 | 57,3 | 93 | 0,0814 | 0,0429 |
| CF3(OC3F6) | 45–73 | 98 | 0,1395 | 0,0736 |
| C6F12H2 | 66,5 | 134 | 0,5581 | 0,2945 |
| | 66,8 | 149 | 0,7325 | 0,3865 |
| | 67,3 | 168 | 0,9534 | 0,5030 |
| C6F13H | 67 | 181 | 1,1046 | 0,5828 |
| C5H12 | 36,2 | 249 | 1,8953 | 1,0000 |
| CCl3F | 24 | 290 | 2,3720 | 1,2515 |

C5H12 ist N-Pentan als Referenzstoff und CCl3F ist üblicherweise verwendeter Chlorkohlenwasserstoff.

## Patentansprüche

1. Weitgehend geschlossenzelliger Hartschaumstoff auf Polyurethan- bzw. Polyisocyanurat-Basis, dessen zellige Struktur durch Aufschäumen von Hartschaumrohstoffen auf Basis von Polyolen und Isocyanaten mit Kohlendioxid als Blähmittel, ggf. unter zusätzlicher Verwendung von Aktivatoren und/oder Stabilisatoren gebildet ist, dadurch gekennzeichnet, daß der Hartschaumstoff im wesentlichen eine homogene Zellenstruktur mit einer Zellengröße von kleiner als 100 $\mu$m Durchmesser und im wesentlichen $CO_2$ - Blähmittel (A) sowie mit Anteilen eines physikalischen in zumindest einem der verwendeten Hartschaumrohstoffe unlöslichen oder schwer löslichen, d.h. praktisch unlöslichen Blähmittel (B) ausgewählt aus der Gruppe der perfluorierten oder im wesentlichen perfluorierten Kohlenwasserstoffe und der perfluorierten oder im wesentlichen perfluorierten Äther und Mischungen hieraus, gegebenfalls im Mischung mit bis zu 50 Vol. -% an polaren Blähmitteln oder aliphatischen oder zyklischen Kohlenwasserstoffen in einem Gewichtsanteil von maximal 1:1 bezogen auf die vorgenannten Blähmitte (B) als Zelleninhalt aufweist.

2. Hartschaumstoff nach Anspruch 1, dadurch gekennzeicknet, daß, die Zellengröße zwischen 50 $\mu$m und 80 $\mu$m Durchmesser aufweist.

3. Hartschaumstoff nach einem der Ansprüche 1 oder 2, dadurch gekennzeichnet, daß der Gewichtsanteil des in zumindest einem der verwendeten Hartschaumrohstoffe unlöslichen oder schwer löslichen, d.h. praktisch unlöslichen Blähmittels kleiner als 3,5 % des Hartschaumstoffs ist.

4. Hartschaumstoff nach einem der Ansprüche 1 bis 3, dadurch gekennzeichnet, daß der Gewichtsanteil des in zumindest einem der verwendeten Hartschaumrohstoffe unlöslich oder schwer löslich, d.h. praktisch unlöslichen Blähmittels kleiner als 2 % des Hartschaumstoffs ist.

5. Hartschaumstoff nach einem der Ansprüche 1 bis 4, dadurch gekennzeichnet, daß der Gewichtsanteil des in zumindest einem der verwendeten Hartschaumrohstoffe unlöslichen oder schwer löslichen, d.h. praktisch unlöslichen Blähmittels ca. 1 % des Hartschaumstoffs ist.

6. Hartschaumstoff nach einem der Ansprüche 1 bis 5, dadurch gekennzeichnet, daß das in zumindest einem der verwendeten Hartschaumrohstoffe unlösliche oder schwer lösliche, d.h. praktisch unlösliche Blähmittel ein Blähmittel aus der Gruppe der perfluorierten oder im wesentlichen perfluorierten Äther ist.

7. Hartschaumstoff nach einem der Ansprüche 1 bis 5, dadurch gekennzeichnet, daß das in zumindest einem der verwendeten Hartschaumrohstoffe unlösliche oder schwer lösliche, d.h. praktisch unlösliche Blähmittel ein Blähmittel aus der Gruppe der perfluorierten oder im wesentlichen perfluorierten Kohlenwasserstoffe ist.

8. Hartschaumstoff nach einem der Ansprüche 1 bis 7, dadurch gekennzeichnet, daß das in zumindest einen der verwendeten Hartschaumrohstoffe unlösliche oder schwer lösliche, d.h. praktisch unlösliche Blähmittel einen normalen Siedepunkt oder Siedebereich innerhalb eines Temperaturbereichs von 20 °C bis 80 °C aufweist.

9. Hartschaumstoff nach den Ansprüchen 7 und 8, dadurch gekennzeichnet, daß das im zumindest einem der verwendeten Hartschaumrohstoffe unlösliche oder schwer lösliche, d.h. praktisch unlösliche Blähmittel perfluoriertes oder im wesentlichen perfluoriertes Pentan ($C_5F_{12}$) ist.

10. Hartschaumstoff nach Ansprüchen 7 und 8, dadurch gekennzeichnet, daß das in zumindest einem der verwendeten Hartschaumrohstoffe unlösliche oder schwer lösliche, d.h. praktisch unlöslicher Blähmittel perfluoriertes oder im wesentlichen perfluoriertes Hexan ($C_6F_{14}$) ist.

11. Hartschaumstoff nach einem der Ansprüche 1 bis 10, dadurch gekennzeichnet, daß er zumindest ein in den Hartschaumrohstoffen lösliches Blähmittel enthält, dessen Gewichtsanteil gleich oder Kleiner dem Gewichtsanteil des unlöslichen Blähmittels ist.

12. Hartschaumstoff nach Anspruch 11, dadurch gekennzeichnet, daß das im Hartschaumrohstoff lösliche Blähmittel ein aliphatischer Kohlenwasserstoff ist.

13. Hartschaumrohrstoff nach Anspruch 12, dadurch gekennzeichnet, daß das in dem Hartschaumrohstoff lösliche Blähmittel n-Pentan und/oder n-Hexan ist.

14. Hartschaumrohstoff nach Anspruch 11, dadurch gekennzeichnet, daß das im Hartschaumrohstoff lösliche Blähmittel ein cyclischer Kohlenwasserstoff ist.

15. Hartschaumstoff nach Anspruch 14, dadurch gekennzeichnet, daß das in dem Hartschaumrohstoff lösliche Blähmittel Cyclopentan und/oder Cyclohexan ist.

16. Hartschaumstoff nach einem der Ansprüche 1 bis 15, dadurch gekennzeichnet, daß er auf zumindest einem der verwendeten Hartschaumrohstoffe unlösliche oder schwer lösliche, d.h. praktisch unlösliche Blähmittel nukleierend wirkenden Emulgator enthält.

17. Hartschaumstoff nach Anspruche 16, dadurch gekennzeichnet, daß er einen anorganischen Emulgator enthält.

18. Hartschaumstoff nach Anspruch 17, dadurch gekennzeichnet, daß er Kieselgel enthält.

19. Hartschaumstoff nach Anspruch 16, dadurch gekennzeichnet, daß er einen organischen Emulgator enthält.

20. Hartschaumstoff nach Anspruch 19, dadurch gekennzeichnet, daß er Stärke (Amylum solubile) enthält.

21. Hartschaumstoff nach einem der Ansprüche 16 bis 20, dadurch gekennzeichnet, daß der Emulgatoranteil ca. 2 % der Gewichtsanteile des zum, Einsatz gebrachten, in einem der Hartschaumrohstoffe unlöslichen oder schwer löslichen, d.h. praktisch unlöslichen Blähmittels ist.

22. Verfahren zur Herstellung eines Hartschaumstoffes gemäß Anspruch 1, dadurch gekennzeichnet, daß zur Bildung eines feinporigen Hartschaumstoffs in zumindest einem der Hartschaumrohstoffe ein in diesem Hartschaumrohstoff unlösliches oder schwer lösliches und damit praktisch unlösliches Blähmittel (B) in Form der dispersen Phase einer Emulsion mit flüssiger Tröpfengröße von weniger als 10 $\mu$m Durchmesser und einem Gewichtsanteil von weniger als 3,5 % des Hartschaumstoffs vor Beginn der chemischen Reaktion homogen einemulgiert wird, und daß die Hartschaumrohstoffe Komponenten zur Erzeugung des wesentlichen Bedarfs an Blähmittel in Form von Kohlendioxid enthalten.

23. Verfahren nach Anspruch 22, dadurch gekennzeichnet, daß zur Bildung eines feinporigen Hartschaumstoffs in zumindest einer der Hartschaumrohstoffe ein in diesem Hartschaumrohstoff unlösliches oder schwer lösliches und damit praktisch unlösliches Blähmittel in Form der dispersen Phase einer Emulsion mit flüssiger Tröpfchengröße von ca. 10 $\mu$m Durchmesser und einem Gewichtsanteil von ca. 2 % des Hartschaumstoffs vor Beginn der chemischen Reaktion homogen einemulgiert wird, und daß die Hartschaumrohstoffe Komponenten zur Erzeugung des wesentlichen Bedarfs an Blähmittel in Form von Kohlendioxid enthalten.

24. Verfahren nach Anspruch 22, dadurch gekennzeichnet, daß zur Bildung eines feinporigen Hartschaumstoffs in zumindest einer der Hartschaumrolsstoffe ein in diesem Hartschaumrohstoff unlösliches oder schwer lösliches und damit praktisch unlösliches Blähmittel in Form der dispersen Phase einer Emulsion mit flüssiger Tröpfchengröße von ca. 4 $\mu$m Durchmesser und einem Gewichtsanteil von ca. 1 % des Hartschaumstoffs vor Beginn der chemischen Reaktion homogen einemulgiert wird, und daß die Hartschaumrohstoffe Komponenten zur Erzeugung des wesentlichen Bedarfs an Blähmittel in Form von Kohlendioxid enthalten.

25. Verfahren nach einem der Ansprüche 22 bis 24, dadurch gekennzeichnet, daß zur Bildung von Kohlendioxid während des Schäumprozesses die Polyol-Rohstoffkomponente mit einer erforderlichen Menge von Wasser angereichert ist.

26. Verfahren nach Anspruch 22 bis 25, dadurch gekennzeichnet, daß der Gewichtsanteil des Wassergehalts 2 bis 6 % des Polyols ist.

27. Verfahren nach einem der Ansprüche 22 bis 26, dadurch gekennzeichnet, daß das in zumindest einem der verwendeten Hartschaumrohstoffe unlösliche oder schwer lösliche, d.h. praktisch unlösliche Blähmittel unter Anwendung hoher Scherkräfte in diesem Hartschaumstoff, in dem dieses Blähmittel unlöslich oder schwer löslich, d.h. praktisch unlöslich ist, als disperse Phase einer Emulsion eingebracht ist.

28. Verfahren nach einem der Ansprüche 22 bis 27, dadurch gekennzeichnet, daß ein in den Hartschaumrohstoffen lösliches Blähmittel in diesen eingebracht und gelöst wird, wobei die Gewichtsanteile dieses löslichen Blähmittels maximal gleich den Gewichtsanteilen sind.

29. Verfahren nach Anspruch 28, dadurch gekennzeichnet, daß die Einbringung des im Hartschaumrohstoff löslichen Blähmittels vor der Einbringung des darin unlöslichen bzw. praktisch unlöslichen Blähmittels in den Hartschaumrohstoff mit diesem eine Lösung bildend erfolgt.

30. Verfahren nach einem der Ansprüche 22 bis 29, dadurch gekennzeichnet, daß das in zumindest einem der verwendeten Hartschaumrohstoffe unlösliche oder schwer lösliche, d.h. praktisch unlösliche Blähmittel ein Blähmittel aus der Gruppe der perfluorierten oder im wesentlichen perfluorierten Äther ist.

31. Verfahren nach einem der Ansprüche 22 bis 30, dadurch gekennzeichnet, daß das in zumindest einem der verwendeten Hartschaumrohstoffe unlösliche oder schwer lösliche, d.h. praktisch unlösliche Blähmittel ein Blähmittel aus der Gruppe der perfluorierten oder im wesentlichen perfluorierten Kohlenwasserstoffe ist.

32. Verfahren nach einem der Ansprüche 22 bis` 31, dadurch gekennzeichnet, daß das in zumindest einen der verwendeten Hartschaumrohstoffe unlösliche oder schwer lösliche, d.h. praktisch unlösliche Blähmittel einen normalen Siedepunkt oder Siedebereich innerhalb eines Temperaturbereichs von 20 ° C bis 80 ° C aufweist.

**33.** Verfahren nachden Ansprüchen 31 und 32, dadurch gekennzeichnet, daß das im zumindest einem der verwendeten Hartschaumrohstoffe unlösliche oder schwer lösliche, d.h. praktisch unlösliche Blähmittel perfluoriertes oder im wesentlichen perfluoriertes Pentan ($C_5F_{12}$) ist.

**34.** Verfahren nach Ansprüchen 31 und 32, dadurch gekennzeichnet, daß das in zumindest einem der verwendeten Hartschaumrohstoffe unlösliche oder schwer lösliche, d.h. praktisch unlöslicher Blähmittel perfluoriertes oder im wesentlichen perfluoriertes Hexan ($C_6F_{14}$) ist.

**35.** Verfahren nach einem der Ansprüche 22 bis 34, dadurch gekennzeichnet, daß er zumindest ein in den Hartschaumrohstoffen lösliches Blähmittel enthält, dessen Gewichtsanteil gleich oder kleiner dem Gewichtsanteil des unlöslichen Blähmittels ist.

**36.** Hartschaumstoff nach Anspruch 35, dadurch gekennzeichnet, daß das im Hartschaumrohstoff lösliche Blähmittel ein aliphatischer Kohlenwasserstoff ist.

**37.** Verfahren nach Anspruch 36, dadurch gekennzeichnet, daß das in dem Hartschaumrohstoff lösliche Blähmittel n-Pentan und/oder Hexan ist.

**38.** Verfahren nach Anspruch 35, dadurch gekennzeichnet, daß das im Hartschaumrohrstoff lösliche Blähmittel ein cyclischer Kohlenwassrstoff ist.

**39.** Verfahren nach Anspruch 38, dadurch gekennzeichnet, daß das in dem Hartschaumrohstoff lösliche Blähmittel Cyclopentan und/oder Cyclohexan ist.

**40.** Verfahren nach einem der Ansprüche 22 bis 39, dadurch gekennzeichnet, daß das in zumindest einem der verwendeten Hartschaumrohstoffe unlösliche oder schwer lösliche, d.h. praktisch unlösliche Blähmittel unter Anwendung eines auf dieses Blähmittel nukleierend wirkenden Emulgators in diesen Hartschaumrohstoff, in dem das Blähmittel unlöslich oder schwer löslich, d.h. praktisch unlöslich ist, als disperse Phase einer Emulsion eingebracht ist.

**41.** Verfahren nach Anspruch 40, dadurch gekennzeichnet, daß das in zumindest einem der verwendeten Hartschaumrohstoffe unlösliche oder schwer lösliche, d.h. praktisch unlösliche Blähmittel zunächst mit dem auf dieses Blähmittel nukleierend wirkenden Emulgator vermischt ist und anschließend in den Hartschaumrohstoff eingearbeitet wird, in dem das Blähmittel unlöslich oder schwer löslich, d.h. praktisch unlöslich ist.

**42.** Verfahren nach einem der Ansprüche 40 oder 41, dadurch gekennzeichnet, daß ein auf das Blähmittel nukleierend wirkender anorganischer Emulgator verwendet wird.

**43.** Verfahren nach Anspruch 42, dadurch gekennzeichnet, daß Kieselgel als anorganischer Emulgator verwendet wird.

**44.** Verfahren nach einem der Ansprüche 40 oder 41, dadurch gekennzeichnet, daß ein auf das Blähmittel nukleierend wirkender organischer Emulgator verwendet wird.

**45.** Verfahren nach Anspruch 44, dadurch gekennzeichnet, daß als organischer Emulgator Stärke (Amylum solubile) als organischer Emulgator verwendet wird.

**46.** Verfahren nach einem der Ansprüche 22 bis 45, dadurch gekennzeichnet, daß das in der Polyol-Rohstoffkomponente unlösliche bzw. praktisch unlöslich Blähmittel in diese Polyol-Rohstoffkomponente intensiv und homogen als disperse Phase einer Emulsion eingearbeitet ist, in der es unlöslich oder schwer löslich, d.h. praktisch unlöslich ist.

**47.** Verfahren nach Anspruch 46, dadurch gekennzeichnet, daß das Blähmittel zunächst mit einem Emulgator vermischt wird, daß dieses Gemisch in der Polyol-Rohstoffkomponente unter Bildung einer Emulsion verteilt wird und daß die erhaltene Emulsion mit der Isocyanat-Rohstoffkomponente vereinigt und verschäumt wird.

**48.** Verfahren nach Anspruch 46, dadurch gekennzeichnet, daß das in der Polyol-Rohstoffkomponente lösliche Blähmittel in diese Polyol-Rohstoffkomponente eine Lösung bildend eingerührt wird und anschließend in diese Lösung das in der Polyol-Rostoffkomponente unlösliche bzw. praktisch unlösliche Blähmittel in diese Polyol-Rohstoffkomponente intensiv und homogen als disperse Phase einer Emulsion eingearbeitet ist, in der es unlöslich oder schwer löslich, d.h. praktisch unlöslich ist.

**49.** Verfahren nach Anspruch 47, dadurch gekennzeichnet, daß das in der Polyol-Rohstoffkomponente lösliche Blähmittel in diese Polyol-Rohstoffkomponente eine Lösung bildend eingerührt wird, daß das Blähmittel zunächst mit einem Emulgator vermischt wird, daß dieses Gemisch in der Polyol-Rohstoffkomponente unter Bildung einer Emulsion verteilt wird und daß die erhaltene Emulsion mit der Isocyanat-Rohstoffkomponente vereinigt und verschäumt wird.

**50.** Verfahren nach einem der Ansprüche 22 bis 49, dadurch gekennzeichnet, daß in zumindest einem der verwendeten Hartschaumrohstoffe unlösliche oder schwer lösliche, d.h. praktisch unlösliche Blähmittel unterschiedlicher chemischer Art verwendet sind.

## Claims

**1.** Largely closed cell hard foam material on a base of polyurethane or polyisocyanurate, the cellular structure of which is formed by the foaming of hard foam raw materials on the base of polyols and isocyanates with carbon dioxide as blowing agent, in a given case with the additional use of activators and/or stabilisers, characterised thereby, that the hard foam material displays substantially a homogeneous cell structure with a cell size of less than 100 micrometres in diameter and substantially carbon dioxide blowing agents (A) as well as with proportions of a physical blowing agent (B), which is insoluble or difficult to dissolve, i.e. practically insoluble in at least one of the hard foam raw materials used and selected from the group of the perfluorinated or substantially perfluorinated hydrocarbons and the perfluorinated or substantially perfluorinated ethers and mixtures therefrom, in a given case in a mixture with up to 50% by volume of polar blowing agents or aliphatic or cyclic hydrocarbons in a weight proportion of at most 1:1 referred to the aforementioned blowing agents (B) as cell content.

**2.** Hard foam material according to claim 1, characterised thereby, that the cell size displays diameters between 50 micrometres and 80 micrometres.

**3.** Hard foam material according to one of the claims 1 and 2, characterised thereby, that the weight proportion of the blowing agent, which is insoluble or difficult to dissolve, i.e. practically insoluble in at least one of the hard foam raw materials used, is less than 3.5% of the hard foam material.

**4.** Hard foam material according to one of the claims 1 to 3, characterised thereby, that the weight proportion of the blowing agent, which is insoluble or difficult to dissolve, i.e. practically insoluble in at least one of the hard foam raw materials used, is less than 2% of the hard foam material.

**5.** Hard foam material according to one of the claims 1 to 4, characterised thereby, that the weight proportion of the blowing agent, which is insoluble or difficult to dissolve, i.e. practically insoluble in at least one of the hard foam raw materials used, is about 1% of the hard foam material.

**6.** Hard foam material according to one of the claims 1 to 5, characterised thereby, that the blowing agent, which is insoluble or difficult to dissolve, i.e. practically insoluble in at least one of the hard foam raw materials used, is a blowing agent selected from the group of the perfluorinated or substantially perfluorinated ethers.

**7.** Hard foam material according to one of the claims 1 to 5, characterised thereby, that the blowing agent, which is insoluble or difficult to dissolve, i.e. practically insoluble in at least one of the hard foam raw materials used, is a blowing agent selected from the group of the perfluorinated or substantially perfluorinated hydrocarbons.

**8.** Hard foam material according to one of the claims 1 to 7, characterised thereby, that the blowing agent, which is insoluble or difficult to dissolve, i.e. practically insoluble in at least one of the hard foam raw materials used, displays a normal boiling point or boiling region within a temperature range of 20°C to

EP 0 405 439 B1

80°C.

9.  Hard foam material according to the claims 7 and 8, characterised thereby, that the blowing agent, which is insoluble or difficult to dissolve, i.e. practically insoluble in at least one of the hard foam raw materials used, is perfluorinated or substantially perfluorinated pentane ($C_5F_{12}$).

10. Hard foam material according to the claims 7 and 8, characterised thereby, that the blowing agent, which is insoluble or difficult to dissolve, i.e. practically insoluble in at least one of the hard foam raw materials used, is perfluorinated or substantially perfluorinated hexane ($C_6F_{14}$).

11. Hard foam material according to one of the claims 1 to 10, characterised thereby, that it contains at least one blowing agent which is soluble in the hard foam raw materials and the weight proportion of which is equal to or smaller than the weight proportion of the insoluble blowing agent.

12. Hard foam material according to claim 11, characterised thereby, that the blowing agent, which is soluble in the hard foam raw material, is an aliphatic hydrocarbon.

13. Hard foam material according to claim 12, characterised thereby, that the blowing agent, which is soluble in the hard foam raw material, is n-pentane and/or n-hexane.

14. Hard foam material according to claim 11, characterised thereby, that the blowing agent, which is soluble in the hard foam raw material, is a cyclic hydrocarbon.

15. Hard foam material according to claim 14, characterised thereby, that the blowing agent, which is soluble in the hard foam raw material, is cyclopentane and/or cyclohexane.

16. Hard foam material according to one of the claims 1 to 15, characterised thereby, that it contains an emulsifier acting in nucleating manner on the blowing agent which is insoluble or difficult to dissolve, i.e. practically insoluble in at least one of the hard foam raw materials used.

17. Hard foam material according to claim 16, characterised thereby, that it contains an inorganic emulsifier.

18. Hard foam material according to claim 17, characterised thereby, that it contains silica.

19. Hard foam material according to claim 16, characterised thereby, that it contains an organic emulsifier.

20. Hard foam material according to claim 19, characterised thereby, that it contains starch (soluble amylum).

21. Hard foam material according to one of the claims 16 to 20, characterised thereby, that the proportion of the emulsifier is about 2% of the proportion by weight of the blowing agent, which is insoluble or difficult to dissolve, i.e. practically insoluble in at least one of the hard foam raw materials used and brought into use.

22. Method for the production of a hard foam material according to claim 1, characterised thereby, that for the formation of a fine-pored hard foam material, a blowing agent (B), which is insoluble or difficult to dissolve, i.e. practically insoluble in at least one of the hard form raw materials used, is homogeneously emulsified into this hard foam raw material in the form of the disperse phase of an emulsion with a liquid droplet size of less than 10 micrometres in diameter and a proportion by weight of less than 3.5% of the hard foam material before the beginning of the chemical reaction and that the hard foam raw materials contain components for the production of the substantial requirement of blowing agent in the form of carbon dioxide.

23. Method according to claim 22, characterised thereby, that for the formation of a fine-pored hard foam material, a blowing agent, which is insoluble or difficult to dissolve, i.e. practically insoluble in at least one of the hard foam raw materials used, is homogeneously emulsified into this hard foam raw material in the form of the disperse phase of an emulsion with a liquid droplet size of about 10 micrometres in

21

diameter and a proportion by weight of about 2% of the hard foam material before the beginning of the chemical reaction and that the hard foam raw materials contain components for the production of the substantial requirement of blowing agent in the form of carbon dioxide.

24. Method according to claim 22, characterised thereby, that for the formation of a fine-pored hard foam material, a blowing agent, which is insoluble or difficult to dissolve, i.e. practically insoluble in at least one of the hard foam raw materials used, is homogeneously emulsified into this hard foam raw material in the form of the disperse phase of an emulsion with a liquid droplet size of about 4 micrometres in diameter and a proportion by weight of about 1% of the hard foam material before the beginning of the chemical reaction and that the hard foam raw materials contain components for the production of the substantial requirement of blowing agent in the form of carbon dioxide.

25. Method according to one of the claims 22 to 24, characterised thereby, that for the formation of carbon dioxide during the foaming process, the polyol raw material component is enriched with a requisite quantity of water.

26. Method according to claim 22 to 25, characterised thereby, that the proportion by weight of the water content is 2 to 6% of the polyol.

27. Method according to one of the claims 22 to 26, characterised thereby, that the blowing agent, which is insoluble or difficult to dissolve, i.e. practically insoluble in at least one of the hard foam raw materials used, is introduced as disperse phase of an emulsion into this hard foam material, in which this blowing agent is insoluble or difficult to dissolve, i.e. practically insoluble, with the application of great shear forces.

28. Method according to one of the claims 22 to 27, characterised thereby, that a blowing agent, which is soluble in the hard foam raw materials, is introduced into and dissolved in these, wherein the proportions by weight of this soluble blowing agent are at most equal to the proportions by weight of the insoluble blowing agent.

29. Method according to claim 28, characterised thereby, that the introduction of the blowing agent, which is soluble in the hard foam raw materials, takes place before the introduction of the blowing agent, which is insoluble or practically insoluble therein, in the hard foam raw material while forming a solution therewith.

30. Method according to one of the claims 22 to 29, characterised thereby, that the blowing agent, which is insoluble or difficult to dissolve, i.e. practically insoluble in at least one of the hard foam raw materials used is a blowing agent selected from the group of the perfluorinated or substantially perfluorinated ethers.

31. Method according to one of the claims 22 to 30, characterised thereby, that the blowing agent, which is insoluble or difficult to dissolve, i.e. practically insoluble in at least one of the hard foam raw materials used is a blowing agent selected from the group of the perfluorinated or substantially perfluorinated hydrocarbons.

32. Method according to one of the claims 22 to 31, characterised thereby, that the blowing agent, which is insoluble or difficult to dissolve, i.e. practically insoluble in at least one of the hard foam raw materials used, displays a normal boiling point or boiling region within a temperature range of 20°C to 80°C.

33. Method according to the claims 31 and 32, characterised thereby, that the blowing agent, which is insoluble or difficult to dissolve, i.e. practically insoluble in at least one of the hard foam raw materials used, is perfluorinated or substantially perfluorinated pentane ($C_5F_{12}$).

34. Method according to the claims 31 and 32, characterised thereby, that the blowing agent, which is insoluble or difficult to dissolve, i.e. practically insoluble in at least one of the hard foam raw materials used, is perfluorinated or substantially perfluorinated hexane ($C_6F_{14}$).

**35.** Method according to one of the claims 22 to 34, characterised thereby, that it contains at least one blowing agent which is soluble in the hard foam raw materials and the weight proportion of which is equal to or smaller than the weight proportion of the insoluble blowing agent.

**36.** Method according to claim 35, characterised thereby, that the blowing agent, which is soluble in the hard foam raw material, is an aliphatic hydrocarbon.

**37.** Method according to claim 36, characterised thereby, that the blowing agent, which is soluble in the hard foam raw material, is n-pentane and/or n-hexane.

**38.** Method according to claim 35, characterised thereby, that the blowing agent, which is soluble in the hard foam raw material, is a cyclic hydrocarbon.

**39.** Method according to claim 38, characterised thereby, that the blowing agent, which is soluble in the hard foam raw material, is cyclcopentane and/or cyclohexane.

**40.** Method according to one of the claims 22 to 39, characterised thereby, that the blowing agent, which is insoluble or difficult to dissolve, i.e. practically insoluble in at least one of the hard foam raw materials used, is introduced as disperse phase of an emulsion into this hard foam material, in which this blowing agent is insoluble or difficult to dissolve, i.e. practically insoluble, with the application of an emulsifier acting in nucleating manner on this blowing agent.

**41.** Method according to claim 40, characterised thereby, that the blowing agent, which is insoluble or difficult to dissolve, i.e. practically insoluble in at least one of the hard foam raw materials used, is initially intermixed with the emulsifier acting in nucleating manner on this blowing agent and subsequently worked into the hard foam raw material, in which the blowing agent is insoluble or difficult to dissolve, i.e. practically insoluble.

**42.** Method according to one of the claims 40 and 41, characterised thereby, that an inorganic emulsifier acting in nucleating manner on the blowing agent is used.

**43.** Method according to claim 42, characterised thereby, that silica is used as inorganic emulsifier.

**44.** Method according to one of the claims 40 and 41, characterised thereby, that an organic emulsifier acting in nucleating manner on the blowing agent is used.

**45.** Method according to claim 44, characterised thereby, that starch (soluble amylum) is used as organic emulsifier.

**46.** Method according to one of the claims 22 to 45, characterised thereby, that the blowing agent, which is insoluble or practically insoluble in the polyol raw material component, is worked as disperse phase of an emulsion, in which it is soluble or difficult to dissolve, i.e. practically insoluble, intensively and homogeneously into this polyol raw material component.

**47.** Method according to claim 46, characterised thereby, that the blowing agent is initially intermixed with an emulsifier, that this mixture is distributed in the polyol raw material component whilst forming an emulsion and that the emulsion obtained is united and foamed with the isocyanate raw material component.

**48.** Method according to claim 46, characterised thereby, that the blowing agent, which is soluble in the polyol raw material component, is stirred into this polyol raw material component whilst forming a solution and the blowing agent, which is insoluble or practically insoluble in the polyol raw material component, is worked as disperse phase of an emulsion, in which it is insoluble or difficult to dissolve, i.e. practically insoluble, intensively and homogeneously into this polyol raw material component.

**49.** Method according to claim 47, characterised thereby, that the blowing agent, which is soluble in the polyol raw material component, is stirred into this polyol raw material component whilst forming a solution, that the blowing agent is initially intermixed with an emulsifier, that this mixture is distributed in

23

EP 0 405 439 B1

the polyol raw material component whilst forming an emulsion and that the emulsion obtained is united and foamed with this isocyanate raw material component.

50. Method according to one of the claims 22 to 49, characterised thereby, that blowing agents are used, which are of different chemical kind and insoluble or difficult to dissolve, i.e. practically insoluble in at least one of the hard foam raw materials used.

**Revendications**

1. Mousse rigide, entièrement à alvéoles fermés, à base de polyuréthanne ou de polyisocyanurate, dont la structure alvéolaire est formée par expansion de matières premières de mousse rigide à base de polyols et d'isocyanates avec de l'anhydride carbonique comme agent d'expansion, éventuellement avec utilisation supplémentaire d'activateurs et/ou de stabilisants, caractérisée en ce que la mousse rigide présente pour l'essentiel une structure alvéolaire homogène ayant une grosseur d'alvéole correspondant à un diamètre inférieur à 100 $\mu$m, et comporte essentiellement, comme contenu des alvéoles, un agent d'expansion (A) de type $CO_2$, ainsi que certaines quantités d'un agent d'expansion (B), physique, insoluble ou difficilement soluble, c'est-à-dire pratiquement insoluble, dans au moins l'une des matières premières de mousse rigide utilisées, choisi parmi l'ensemble comprenant les hydrocarbures perfluorés ou essentiellement perfluorés et les éther perfluorés ou essentiellement perfluorés et leurs mélanges, éventuellement en mélange avec jusqu'à 50 % en volume d'agents d'expansion polaires ou d'hydrocarbures aliphatiques ou cycliques, selon un rapport pondéral maximal de 1:1 par rapport à l'agent d'expansion (B) mentionné ci-dessus.

2. Mousse rigide selon la revendication 1, caractérisée en ce que la grosseur des alvéoles correspond à un diamètre compris entre 50 et 80 $\mu$m.

3. Mousse rigide selon l'une des revendications 1 ou 2, caractérisée en ce que la quantité en poids de l'agent d'expansion insoluble ou difficilement soluble, c'est-à-dire pratiquement insoluble, dans au moins l'une des matières premières de mousse rigide utilisées, est inférieure à 3,5 % par rapport à la mousse rigide.

4. Mousse rigide selon l'une des revendications 1 à 3, caractérisée en ce que la quantité en poids de l'agent d'expansion insoluble ou difficilement soluble, c'est-à-dire pratiquement insoluble, dans au moins l'une des matières premières de mousse rigide utilisées, est inférieure à 2 % par rapport à la mousse rigide.

5. Mousse rigide selon l'une des revendications 1 à 4, caractérisée en ce que la quantité en poids de l'agent d'expansion insoluble ou difficilement soluble, c'est-à-dire pratiquement insoluble, dans au moins l'une des matières premières de mousse rigide utilisées, est d'environ 1 % par rapport à la mousse rigide.

6. Mousse rigide selon l'une des revendications 1 à 5, caractérisée en ce que l'agent d'expansion insoluble ou difficilement soluble, c'est-à-dire pratiquement insoluble, dans au moins l'une des matières premières de mousse rigide utilisées, est un agent d'expansion choisi parmi l'ensemble comprenant les éthers perfluorés ou essentiellement perfluorés.

7. Mousse rigide selon l'une des revendications 1 à 5, caractérisée en ce que l'agent d'expansion insoluble ou difficilement soluble, c'est-à-dire pratiquement insoluble, dans au moins l'une des matières premières de mousse rigide utilisées, est un agent d'expansion choisi parmi l'ensemble comprenant les hydrocarbures perfluorés ou essentiellement perfluorés.

8. Mousse rigide selon l'une des revendications 1 à 7, caractérisée en ce que l'agent d'expansion insoluble ou difficilement soluble, c'est-à-dire pratiquement insoluble, dans au moins l'une des matières premières de mousse rigide utilisées, a un point d'ébullition normal ou un intervalle normal d'ébullition compris dans l'intervalle de températures de 20 à 80 °C.

9. Mousse rigide selon les revendications 7 et 8, caractérisée en ce que l'agent d'expansion insoluble in difficilement soluble, c'est-à-dire pratiquement insoluble, dans au moins l'une des matières premières

24

de mousse rigide utilisées, est un pentane perfluoré ou essentiellement perfluoré ($C_5F_{12}$).

10. Mousse rigide selon les revendications 7 et 8, caractérisée en ce que l'agent d'expansion insoluble ou difficilement soluble, c'est-à-dire pratiquement insoluble, dans au moins l'une des matières premières de mousse rigide utilisées, est l'hexane perfluoré ou essentiellement perfluoré ($C_6F_{14}$).

11. Mousse rigide selon l'une des revendications 1 à 10, caractérisée en ce qu'elle contient au moins un agent d'expansion soluble dans les matières premières de mousse rigide, dont la quantité en poids est inférieure ou égale à la quantité en poids de l'agent d'expansion insoluble.

12. Mousse rigide selon la revendication 11, caractérisée en ce que l'agent d'expansion soluble dans la matière première de mousse rigide est un hydrocarbure aliphatique.

13. Mousse rigide selon la revendication 12, caractérisée en ce que l'agent d'expansion soluble dans la matière première de mousse rigide est le n-pentane et/ou le n-hexane.

14. Mousse rigide selon la revendication 11, caractérisée en ce que l'agent d'expansion soluble dans la matière première de mousse rigide est un hydrocarbure cyclique.

15. Mousse rigide selon la revendication 14, caractérisée en ce que l'agent d'expansion soluble dans la matière première de mousse rigide est le cyclopentane et/ou le cyclohexane.

16. Mousse rigide selon l'une des revendications 1 à 15, caractérisée en ce qu'elle contient un émulsifiant ayant un effet de nucléation sur les agents d'expansion insolubles ou difficilement solubles, c'est-à-dire pratiquement insolubles, dans au moins l'une des matières premières de mousse rigide utilisées.

17. Mousse rigide selon la revendication 16, caractérisée en ce qu'elle contient un émulsifiant minéral.

18. Mousse rigide selon la revendication 17, caractérisée en ce qu'elle contient du gel de silice.

19. Mousse rigide selon la revendication 16, caractérisée en ce qu'elle contient un émulsifiant organique.

20. Mousse rigide selon la revendication 19, caractérisée en ce qu'elle contient de l'amidon (Amylum solubile).

21. Mousse rigide selon l'une des revendications 16 à 20, caractérisée en ce que la quantité de l'émulsifiant est d'environ 4 % des quantités en poids de l'agent d'expansion utilisé, insoluble ou difficilement soluble, c'est-à-dire pratiquement insoluble, dans l'une des matières premières de mousse rigide.

22. Procédé pour fabriquer une mousse rigide selon la revendication 1, caractérisé en ce que, pour former une mousse rigide à alvéoles fins, on introduit par émulsification jusqu'à homogénéité, avant le début de la réaction chimique, dans au moins l'une des matières premières de mousse rigide, un agent d'expansion (B), insoluble ou difficilement soluble et de ce fait pratiquement insoluble, dans cette matière première de mousse rigide, sous forme de la phase dispersée d'une émulsion ayant une grosseur de gouttelettes liquides correspondant à un diamètre inférieur à 10 $\mu$m et présente en une quantité inférieure à 3,5 % de la mousse rigide, et que les matières premières de mousse rigide contiennent des constituants destinés à produire la quantité essentiellement nécessaire d'agent d'expansion sous forme d'anhydride carbonique.

23. Procédé selon la revendication 22, caractérisé en ce que, pour former une mousse rigide à alvéoles fins dans au moins l'une des matières premières de mousse rigide, on introduit par émulsification jusqu'à homogénéité, avant le début de la réaction chimique, un agent d'expansion insoluble ou difficilement soluble et de ce fait pratiquement insoluble, dans cette matière première de mousse rigide, sous forme de la phase dispersée d'une émulsion ayant une grosseur de gouttelettes liquides correspondant à un diamètre d'environ 10 $\mu$m, en une quantité d'environ 2 % par rapport à la mousse rigide, et que les matières premières de mousse rigide contiennent des constituants destinés à produire essentiellement les besoins en agent d'expansion sous forme d'anhydride carbonique.

**24.** Procédé selon la revendication 22, caractérisé en ce que, pour former une mousse rigide à alvéoles fins dans au moins l'une des matières premières de mousse rigide, on introduit par émulsification jusqu'à homogénéité, avant le début de la réaction chimique, un agent d'expansion insoluble ou difficilement soluble et de ce fait pratiquement insoluble, dans cette matière première de mousse rigide, sous forme de la phase dispersée d'une émulsion ayant une grosseur de gouttelettes liquides correspondant à un diamètre d'environ 10 $\mu$m, en une quantité d'environ 1 % par rapport à la mousse rigide, et que les matières premières de mousse rigide contiennent des constituants destinés à produire essentiellement les besoins en agent d'expansion sous forme d'anhydride carbonique.

**25.** Procédé selon l'une des revendications 22 à 24, caractérisé en ce que, pour former l'anhydride carbonique pendant l'opération de moussage, le polyol servant de constituant matière première est enrichi d'une quantité nécessaire d'eau.

**26.** Procédé selon les revendications 22 à 25, caractérisé en ce que la teneur pondérale en eau est de 2 à 6 % par rapport au polyol.

**27.** Procédé selon l'une des revendications 22 à 26, caractérisé en ce que l'agent d'expansion insoluble ou difficilement soluble, c'est-à-dire pratiquement insoluble, dans au moins l'une des matières premières de mousse rigide utilisées, est introduit sous forme de la phase dispersée d'une émulsion, par utilisation de forces de cisaillement intenses, dans cette mousse rigide dans laquelle l'agent d'expansion est insoluble ou difficilement soluble, c'est-à-dire pratiquement insoluble,.

**28.** Procédé selon l'une des revendications 22 à 27, caractérisé en ce qu'un agent d'expansion soluble dans les matières premières de mousse rigide est introduit et dissout dans ces dernières, les quantités en poids de cet agent d'expansion soluble étant au maximum égales aux quantités en poids.

**29.** Procédé selon la revendication 28, caractérisé en ce que l'introduction de l'agent d'expansion soluble dans la matière première de mousse rigide, avant introduction, dans la matière première de mousse rigide, de l'agent d'expansion insoluble ou pratiquement insoluble, dans cette dernière, s'effectue avec cette dernière, en formant une solution.

**30.** Procédé selon l'une des revendications 22 à 29, caractérisé en ce que l'agent d'expansion insoluble ou difficilement soluble, c'est-à-dire pratiquement insoluble, dans au moins l'une des matières premières de mousse rigide utilisées, est un agent d'expansion choisi parmi l'ensemble comprenant les éthers perfluorés ou essentiellement perfluorés.

**31.** Procédé selon l'une des revendications 22 à 30, caractérisé en ce que l'agent d'expansion insoluble ou difficilement soluble, c'est-à-dire pratiquement insoluble, dans au moins l'une des matières premières de mousse rigide utilisées, est un agent d'expansion choisi parmi l'ensemble comprenant les hydrocarbures perfluorés ou essentiellement perfluorés.

**32.** Procédé selon l'une des revendications 22 à 31, caractérisé en ce que l'agent d'expansion insoluble ou difficilement soluble, c'est-à-dire pratiquement insoluble, dans au moins l'une des matières premières de mousse rigide utilisées, a un point d'ébullition normal ou un intervalle normal d'ébullition compris dans l'intervalle de températures de 20 à 80 ° C.

**33.** Procédé selon l'une des revendications 31 et 32, caractérisé en ce que l'agent d'expansion insoluble ou difficilement soluble, c'est-à-dire pratiquement insoluble, dans au moins l'une des matières premières de mousse rigide utilisées, est un pentane perfluoré ou essentiellement perfluoré ($C_5F_{12}$).

**34.** Procédé selon l'une des revendications 31 et 32, caractérisé en ce que l'agent d'expansion insoluble ou difficilement soluble, c'est-à-dire pratiquement insoluble, dans au moins l'une des matières premières de mousse rigide utilisées, est l'hexane perfluoré ou essentiellement perfluoré ($C_6F_{14}$).

**35.** Procédé selon l'une des revendications 22 à 34, caractérisé en ce qu'elle contient au moins un agent d'expansion soluble dans les matières premières de mousse rigide, dont la quantité en poids est inférieure ou égale à la quantité en poids de l'agent d'expansion insoluble.

**36.** Procédé selon la revendication 35, caractérisé en ce que l'agent d'expansion soluble dans la matière première de mousse rigide est un hydrocarbure aliphatique.

**37.** Procédé selon la revendication 36, caractérisé en ce que l'agent d'expansion soluble dans la matière première de mousse rigide est le n-pentane et/ou le n-hexane.

**38.** Procédé selon la revendication 35, caractérisé en ce que l'agent d'expansion soluble dans la matière première de mousse rigide est un hydrocarbure cyclique.

**39.** Procédé selon la revendication 38, caractérisé en ce que l'agent d'expansion soluble dans la matière première de mousse rigide est le cyclopentane et/ou le cyclohexane.

**40.** Procédé selon l'une des revendications 22 à 39, caractérisé en ce que l'agent d'expansion insoluble ou difficilement soluble, c'est-à-dire pratiquement insoluble, dans au moins l'une des matières premières de mousse rigide utilisées, est introduit sous la forme dispersée d'une émulsion, par utilisation d'un émulsifiant ayant un effet de nucléation sur cet agent d'expansion, dans cette matière première de mousse rigide, dans laquelle l'agent d'expansion est insoluble ou difficilement soluble, c'est-à-dire pratiquement insoluble,.

**41.** Procédé selon la revendication 40, caractérisé en ce que l'agent d'expansion insoluble ou difficilement soluble, c'est-à-dire pratiquement insoluble, dans au moins l'une des matières premières de mousse rigide utilisées est d'abord mélangée à l'émulsifiant ayant un effet de nucléation sur cet agent d'expansion, puis est incorporé dans la matière première de mousse rigide, dans laquelle l'agent d'expansion est insoluble ou difficilement soluble, c'est-à-dire pratiquement insoluble.

**42.** Procédé selon l'une des revendications 40 ou 41, caractérisé en ce qu'on utilise un émulsifiant minéral à effet de nucléation sur l'agent d'expansion.

**43.** Procédé selon la revendication 42, caractérisé en ce qu'on utilise du gel de silice comme émulsifiant minéral.

**44.** Procédé selon l'une des revendications 40 ou 41, caractérisé en ce qu'on utilise un émulsifiant organique ayant un effet de nucléation sur l'agent d'expansion.

**45.** Procédé selon la revendication 44, caractérisé en ce qu'on utilise comme émulsifiant organique de l'amidon (Amylum solubile).

**46.** Procédé selon l'une des revendications 22 à 45, caractérisé en ce que l'agent d'expansion insoluble ou pratiquement insoluble dans le polyol servant de constituant matière première est incorporé dans ce polyol servant de constituant matière première d'une manière intense et jusqu'à homogénéité sous forme de la phase dispersée d'une émulsion dans laquelle il est insoluble ou difficilement soluble, c'est-à-dire pratiquement insoluble.

**47.** Procédé selon la revendication 46, caractérisé en ce qu'on mélange d'abord à l'agent d'expansion un émulsifiant ; que ce mélange est réparti dans le polyol servant de constituant matière première avec formation d'une émulsion ; et que l'émulsion obtenue est combinée à l'isocyanate servant de constituant matière première et subit un moussage.

**48.** Procédé selon la revendication 46, caractérisé en ce que l'agent d'expansion soluble dans le polyol servant de constituant matière première est délayé dans ce polyol servant de constituant matière première, en formant une solution, puis on incorpore d'une manière intense et jusqu'à homogénéité, dans ce polyol servant de constituant matière première, et dans cette solution, l'agent d'expansion insoluble ou pratiquement insoluble dans le polyol servant de constituant matière première, sous forme d'une phase dispersée d'une émulsion dans laquelle il est insoluble ou difficilement soluble, c'est-à-dire pratiquement insoluble.

**49.** Procédé selon la revendication 47, caractérisé en ce que l'agent d'expansion soluble dans le polyol servant de constituant matière première est délayé dans ce polyol servant de constituant matière première en formant une solution; que l'on mélange d'abord à l'agent d'expansion un émulsifiant ; que l'on répartit ce mélange dans le polyol servant de constituant matière première avec formation d'une émulsion, et que l'émulsion obtenue est combinée à l'isocyanate servant de constituant matière première et est soumise à un moussage.

50. Procédé selon l'une des revendications 22 à 49, caractérisé en ce qu'on utilise des agents d'expansion insoluble ou difficilement solubles, c'est-à-dire pratiquement insolubles, dans au moins l'une des matières premières de mousse rigide utilisées, présentant différents types chimiques.

Fig.1

Fig. 2

Fig. 3

Fig. 4